# EUROPEAN PATENT SPECIFICATION

(11) **EP 2 708 514 B1**
(45) Date of publication and mention of the grant of the patent: **12.09.2018**
(21) Application number: 12785473.5
(22) Date of filing: 11.05.2012
(51) Int. Cl.: C02F 1/469, B01D 61/44, B01J 49/30, B01J 49/75, B01J 47/04, B01J 47/08, B01J 49/20, B01J 47/12

(54) **REGENERATIVE DEMINERALIZING APPARATUS**
REGENERATIVE ENTMINERALISIERUNGSVORRICHTUNG
APPAREIL DÉMINÉRALISANT RÉGÉNÉRATEUR

(30) Priority: 13.05.2011 JP 2011108013; 13.05.2011 JP 2011108011
(43) Date of publication of application: 19.03.2014
(73) Proprietor: Panasonic Corporation, Kadoma-shi, Osaka 571-8501 (JP)
(72) Inventor: YAMADA, Muneto, Osaka 540-6207 (JP); UNO, Katsuhiko, Osaka 540-6207 (JP); SASABE, Shigeru, Osaka 540-6207 (JP); SHIMA, Michihiro, Osaka 540-6207 (JP); SHIMATO, Takaaki, Osaka 540-6207 (JP); OHAMA, Masahiro, Osaka 540-6207 (JP); SANO, Mitsuhiro, Osaka 540-6207 (JP)
(74) Representative: Eisenführ Speiser
(86) International application number: PCT/JP2012/003105
(87) International publication number: WO 2012/157236

(56) References cited:
- WO-A1-2009/051612
- WO-A2-03/020645
- GB-A- 702 316
- JP-A- 2001 509 074
- JP-A- 2007 501 702
- JP-A- 2009 233 556
- JP-A- 2010 069 408
- JP-A- 2010 201 346
- US-A1- 2004 178 075
- US-A1- 2010 326 833

## Description

### TECHNICAL FIELD

The present invention relates to a regenerative demineralizer apparatus, and is particularly relates to a regenerative demineralizer apparatus, which is capable of removing hardness cations or hardness positive ions such as calcium, magnesium and the like to demineralize or soften water.

### Background Art

Conventionally, there is a regeneration type technology for demineralizing or softening water, which utilizes electrolysis and a water-splitting ion exchange membrane without employing an agent to remove hardness cations, and at the same time is capable of regenerating the water-splitting ion exchange membrane (refer to, for example, Patent Document 1).

This water-splitting ion exchange membrane includes, for example, a cation exchange surface and an anion exchange surface. The water-splitting ion exchange membrane is disposed between the first electrode and the second electrode so that the cation exchange surface faces the first electrode.

In deionization step for removing cation in the solution, electric voltage is applied so that the first electrode serves as an anode and the second electrode serves as a cathode. Cation in the solution is adsorbed on the cation exchange surface of the water-splitting ion exchange membrane to achieve removal of cation from the solution to demineralize the solution.

In a regeneration step for regenerating the water-splitting ion exchange membrane which cation is adsorbed on its cation exchange surface, electric voltage is applied so that the first electrode serves as a cathode and the second electrode serves as an anode. Water-splitting into hydrogen ion and hydroxide ion is occurred in an interface between the cation exchange surface and the anion exchange surface of the water-splitting ion exchange membrane. Hydrogen ion is adsorbed on the cation exchange surface, which causes emission of cation that has been adsorbed on the cation exchange surface. The ion exchange is carried out in this way to achieve the regeneration of the water-splitting ion exchange membrane.

GB 702 316 A discloses a multiple bed comprising layers of cation-exchange material (e.g. a sulphonated phenol-formaldehyde resin) alternating with layers of anion exchange material (e.g. a phenol-formaldehyde resin with amino groups in the aromatic nucleus) being regenerated by passing a salt solution which on electrolysis forms acid at the anode and alkali at the cathode in the planes of pipe layers while simultaneously forming such acid and alkali by electrolysis between anodes in the cation-exchange layers and cathodes in the anion-exchange layers. Some of the liquid intended to be treated by the bed may be used as the salt solution for regeneration. During normal treatment of liquid to remove ions the liquid is passed vertically through the column. In a modification, the column is rectangular in cross section, the two wid-er walls (with which the regenerant pipes communicate) are double and provided on the inside with horizontal rows of perforations spaced 1 cm apart, and the electrodes are located in the planes of the rows of perforations.

US 2010/326833 A1 discloses a membrane package comprising a plurality of membranes, wherein said membrane package is adapted to facilitate a feed stream flow having a process stream flow wherein said hydrodynamic resistance of said feed stream flow is substantially the same as said hydrodynamic resistance of said process stream flow.

WO 2009/051612 A1 discloses a water treatment apparatus that includes a cation exchange chamber containing a cation exchange resin and an anion exchange chamber containing an anion exchange resin. A bipolar interface is located between the resin chambers and defines a zone of water disassociation. A cathode communicates with the cation exchange chamber through a cation exchange membrane. An anode communicates with the anion exchange chamber through an anion exchange membrane. Dilution or flushing water flows through cathode and anode chambers and conveys captured ions to a drain or other waste connection. A baffle may be used in some configurations to divide a resin chamber into an exhausted resin region and a regenerated resin region and causes incoming water to flow through the exhausted resin region first. The exhausted resin region is located near its associated electrode, thus improving the electrical efficiency of the cell. In an alternate design, the apparatus includes a cathode/anode chamber, an anode chamber and an auxiliary electrode chamber disposed between the cathode/anode chamber and a cation exchange media chamber. An anion exchange membrane separates the cathode/anode chamber from the auxiliary electrode chamber. The anode chamber, cathode/anode chamber and auxiliary electrode chamber are energized in predetermined sequences to create both service cycles which produce softened water with reduced ionic content and cleaning cycles to descale the auxiliary electrode chamber and/or anion exchange membrane located between the cathode/anode chamber and the auxiliary electrode chamber.

US 2004/178075 A1 discloses an apparatus for electrode ionization of water. Silica and boron are particularly removed at high rate in processing by the electrode ionization apparatus. An electrode ionization apparatus has an anolyte compartment having an anode, a catholyte compartment having a cathode, concentrating compartments, and desalting compartments. The concentrating compartments and the desalting compartments are alternately formed between the anolyte compartment and the catholyte compartment by alternately arranging a plurality of anion-exchange membranes and a plurality of cation-exchange membranes. The desalting compartments and the concentrating compartments are filled with ion-exchanger. The anion exchanger/cation exchanger volume ratio is 8/2 to 5/5. Electrode water flows into the anolyte compartment and the catholyte compartment. Concentrated water is introduced into the concentrating compartments. Raw water is fed into the desalting compartment to produce the deionised water from the desalting compartment. Water containing silica or boron at a lower concentration than the raw water is introduced into the concentrating compartments as the concentrated water in a direction from a side near an outlet for the deionised water toward a side near an inlet for the raw water of the desalting compartments. At least a part of concentrated water flowing out of the concentrating compartments is discharged out of a circulatory system.

WO 2003/20645 A2 discloses a household apparatus, in particular a washing machine, comprising an electro-chemical treatment device, in particular a water softener, in which two electrodes are provided, with ion exchange membranes arranged between them for delimiting a plurality of channels. According to the invention, means are provided for periodic filling of some channels of the electro-chemical device with a cleaning substance or solution, the latter being apt to dissolve and/or remove saline precipitates eventually formed inside the device.

### CITATION LIST

### Patent Document

Japanese Patent No. 4044148 B

### SUMMARY OF INVENTION

### TECHNICAL PROBLEM

However, in the deionization step of the above-described prior art, cation is actively diffused in the cation exchange surface by being applied with electric voltage. For this reason, electric power is consumed in the deionization step, as well as in the regeneration step.

The present invention is made in order to solve such a problem, and it is an object of the present invention to provide a regenerative demineralizer apparatus, which is capable of reducing the consumption of electric power, as compared with a conventional apparatus.

### SOLUTION TO PROBLEM

A regenerative demineralizer apparatus according to one aspect of the present invention comprises: a cathode and an anode; one or more water-splitting ion exchange membranes laminated between the cathode and the anode wherein an anion exchange surface of the exchange membrane faces the anode and a cation exchange surface of the exchange membrane faces the cathode; and a casing for housing the cathode, the anode and one or more water-splitting ion exchange membranes, wherein the casing includes a first inlet straight line connected with a first outlet to form a first flow path for water for treatment in between, and a second inlet straight line connected with a second outlet forming a second flow path for water for regeneration in between, wherein the water-splitting ion exchange membrane is provided perpendicular to the first flow path and parallel to the second follow path such that water in the first flow path passes through the water-splitting ion exchange membrane. Alternatively, the water-splitting ion exchange membrane has a rectangle shape, wherein a longer side of the rectangle being in parallel with the first flow path, and a shorter side of the rectangle being in parallel with the second flow path.

### ADVANTAGEOUS EFFECTS OF INVENTION

The present invention has an advantageous effect for reducing the consumption of electric power in the regenerative demineralizer apparatus.

### BRIEF DESCRIPTION OF DRAWINGS

[Fig. 1] Fig. 1 is a lateral cross-sectional view, which schematically illustrates a regenerative demineralizer apparatus according to Embodiment 1 of the present invention.
[Fig. 2] Fig. 2A is a side view, which schematically illustrates a cathode, and Fig. 2B is a side view, which schematically illustrates an anode.
[Fig. 3] Fig. 3 is a side view, which schematically illustrates a water-splitting micro-porous ion exchange membrane employed in the regenerative demineralizer apparatus of Fig. 1.
[Fig. 4] Fig. 4A represents a transverse cross-sectional view, which schematically illustrates a regenerative demineralizer apparatus according to Embodiment 2 of the present invention, and Fig. 4B is a longitudinal cross-sectional view, which schematically illustrates the regenerative demineralizer apparatus of Fig. 4A.
[Fig. 5] Fig. 5 is a perspective view, which schematically illustrates a regenerative demineralizer apparatus according to Embodiment 3 of the present invention.
[Fig. 6] Fig. 6 is a longitudinal sectional view, which schematically illustrates the regenerative demineralizer apparatus of Fig. 5.
[Fig. 7] Fig. 7 is a transverse cross-sectional view, which schematically illustrates the regenerative demineralizer apparatus of Fig. 5.
[Fig. 8] Fig. 8 is a plan view, which illustrates a spacer employed in the regenerative demineralizer apparatus of Fig. 5.
[Fig. 9] Fig. 9 is a conceptional diagram, which illustrates flow of the water for treatment in a regenerative demineralizing step of Fig. 5.
[Fig. 10] Fig. 10 is a conceptional diagram, which illustrates flow of the water for regeneration in a regenerative regeneration step of Fig. 5.
[Fig. 11] Fig. 11 is a perspective view, which schematically illustrates a regenerative demineralizer apparatus according to Embodiment 4 of the present invention.
[Fig. 12] Fig. 12 is a longitudinal sectional view, which schematically illustrates the regenerative demineralizer apparatus of Fig. 11.
[Fig. 13] Fig. 13 is a cross-sectional view, which schematically illustrates a first demineralization evaluation apparatus employed in Example 1.
[Fig. 14] Fig. 14 is a cross-sectional view, which schematically illustrates a second demineralization evaluation apparatus employed in Examples 1 and 2.
[Fig. 15] Fig. 15 is a graph, which shows relations of calcium elimination ability (demineralization ability) over time for flowing water.
[Fig. 16] Fig. 16 is a graph, which shows relations of calcium elimination ability (ability to regenerate ion exchange membrane) over time for flowing water.

### DESCRIPTION OF EMBODIMENTS

A regenerative demineralizer apparatus according to the present invention as defined in claim 1 comprises a cathode and an anode; one or more water-splitting ion exchange membrane(s), having a cation exchange surface in one surface and an anion exchange surface in the other surface, and being laminated between the cathode and the anode so that the anion exchange surface faces the anode and the cation exchange surface faces the cathode; and a casing for housing the cathode, the anode and one or more water-splitting ion exchange membrane(s), wherein the casing includes a first inlet and a first outlet serving as an inlet and an outlet of water for treatment, respectively, and a second inlet and a second outlet serving as an inlet and an outlet of water for regeneration, respectively, and wherein the water-splitting ion exchange membrane is provided perpendicular to a straight line connecting the first inlet and the first outlet of the water for treatment and parallel with a straight line connecting the second inlet and the second outlet of the water for regeneration.

According to this configuration, the water for treatment flows perpendicularly to the water-splitting ion exchange membrane in the demineralization of the water for treatment. For this reason, probability of causing contacts between hardness ions in the water for treatment and the water-splitting ion exchange membrane is increased, so that hardness ions are adsorbed with improved efficiency, thereby achieving enhanced demineralization efficiency.

On the other hand, in the regeneration of the water-splitting ion exchange membrane, the water for regeneration flows in parallel with the water-splitting ion exchange membrane. For this reason, eliminated hardness ions do not pass through the inside of the film, but are accompanied with the water for regeneration to smoothly flow along the surface of the water-splitting ion exchange membrane. Therefore, re-adsorption of hardness ions onto the ion exchange membrane is prevented to provide increased regeneration efficiency.

In a regenerative demineralizer apparatus according to the present invention, the first inlet, the first outlet, the second inlet and the second outlet are provided so that a straight line connecting the first inlet and the first outlet of the water for treatment is perpendicular to a straight line connecting the second inlet and the second outlet of the water for regeneration.

According to this configuration, the differential pressure of the water for treatment created between the first inlet and the first outlet can be set to be higher than the differential pressure of the water for regeneration created between the second inlet and the second outlet. This can suppress the electric power consumption and provide improved generation efficiency of the ion exchange membrane.

In a regenerative demineralizer apparatus according to the present invention as defined in claim 3,
the water-splitting ion exchange membrane has a rectangle shape, a longer side of the rectangle being in parallel with a straight line connecting the first inlet and the first outlet of the water for treatment, and a shorter side of the rectangle being in parallel with a straight line connecting the second inlet and the second outlet of the regeneration water.

According to this configuration, in the demineralization of the water for treatment, the water for treatment flows along the longer side of the water-splitting ion exchange membrane. For this reason, the contact time and the contact area for hardness ions in the water for treatment being in contact with the water-splitting ion exchange membrane are increased, so that hardness ions are adsorbed onto the water-splitting ion exchange membrane with improved efficiency, thereby being removed therefrom.

Also, in the regeneration of the water-splitting ion exchange membrane, the water for regeneration flows along the shorter side of the water-splitting ion exchange membrane. For this reason, the eliminated hardness ions flows over the surface of the water-splitting ion exchange membrane in a short time accompanied by the flow of the water for regeneration, so that re-adsorption on the ion exchange membrane is suppressed. The regeneration efficiency of the water-splitting ion exchange membrane is improved.

In a regenerative demineralizer apparatus according to the present invention, the water-splitting ion exchange membrane is formed of a porous material.

According to this configuration, the water for treatment flowing perpendicularly to the water-splitting ion exchange membrane passes through the water-splitting ion exchange membrane in the demineralization of the water for treatment. This allows the water for treatment to be penetrated in the inside of the water-splitting ion exchange membrane, so that the contact area of hardness ions in the water for treatment with the water-splitting ion exchange membrane is further increased to achieve efficient adsorption of hardness ions, thereby providing enhanced demineralization efficiency.

In a regenerative demineralizer apparatus according to the present invention, the apparatus comprises a non-permeable seal member covering a circumference of a laminated body, the laminated body being formed by
laminating a plurality of the water-splitting ion exchange membranes.

According to this configuration, in the demineralization of the water for treatment, the water for treatment flows perpendicularly to the water-splitting ion exchange membrane by the non-permeable seal member without escaping to a space between the laminated body of the water-splitting ion exchange membranes and the casing. For this reason, hardness ions in the water for treatment are effectively adsorbed by the water-splitting ion exchange membrane to achieve enhanced efficiency in the demineralization of the water for treatment.

In a regenerative demineralizer apparatus according to the present invention, the regenerative demineralizer apparatus further comprises a diffusion layer, provided between a laminated body formed by laminating a plurality of the water-splitting ion exchange membranes and an electrode in a side of the first inlet, and having hydraulic resistance in the permeability, which is larger than that of the water-splitting ion exchange membrane.

According to this configuration, in the demineralization of the water for treatment, the water for treatment is diffused in the direction perpendicular to the water-splitting ion exchange membrane by the presence of the diffusion layer. For this reason, the water for treatment passes through broader range in the water-splitting ion exchange membrane to further increase the contact area of the water-splitting ion exchange membrane with hardness ions, thereby providing improved efficiency for demineralizing the water for treatment.

In a regenerative demineralizer apparatus according to the present invention, the regenerative demineralizer apparatus further comprises a spacer member, provided so as to be sandwiched between the adjacent water-splitting ion exchange membranes in the laminated body, the seal member includes an opening extending through the seal member in the thickness direction and facing each of the second inlet and the second outlet of the water for regeneration, and wherein the opening faces the spacer member.

According to this configuration, in the regeneration of the water-splitting ion exchange membrane, the water for regeneration passes through a space formed by the spacer member. This allows the water for regeneration to smoothly flow in parallel with the water-splitting ion exchange membrane to rapidly discharge the eliminated hardness ions. For this reason, re-adsorption of hardness ions on the ion exchange membrane is suppressed to regenerate the water-splitting ion exchange membrane with enhanced efficiency.

According to this configuration, the second inlet and the second outlet of the water for regeneration face the spacer member across the opening. For this reason, in the regeneration of the water-splitting ion exchange membrane, the water for regeneration enters a space in the spacer member from the second inlet through the opening, and is discharged to the second outlet through the opening. As described above, the water for regeneration flows smoothly to achieve efficient regeneration of the ion exchange membrane.

Also, the seal member is capable of preventing the water for treatment from entering a clearance between the laminated body of the water-splitting ion exchange membranes and the casing without blocking the flow of the water for regeneration.

In a regenerative demineralizer apparatus according to the present invention, the opening is disposed in one-on-one relation with the spacer member.

According to this configuration, in the regeneration of the water-splitting ion exchange membrane, the water for regeneration entered from the second inlet flows into a space in the spacer member facing the opening in one-on-one relation without being branched. Also, the water for regeneration, which has passed through the space in the spacer member, is discharged from the second outlet through the opening facing in one-on-one relation without being branched. For this reason, the water for regeneration flows smoothly without disturbance to rapidly force out the eliminated hardness ions to provide improved efficiency for the regeneration of the water-splitting ion exchange membrane.

Preferable embodiments of the present invention will be specifically described below in reference to the annexed figures.

In all figures, identical reference numeral is assigned to identical or equivalent constituent element, and the duplicated descriptions are not given.

Also, for the purpose of the convenience in the description, a direction in parallel with a cation exchange surface and an anion exchange surface of a water-splitting micro-porous ion exchange membrane is referred to as a longitudinal direction, and a direction perpendicular to the longitudinal direction is referred to as a transverse direction.

Further, for the purpose of the convenience in the description, water to be demineralized is referred to as "water for treatment", and water employed for regenerating an ion exchange membrane is referred to as "water for regeneration."

### (Embodiment 1)

### [Configuration of Regenerative Demineralizer Apparatus]

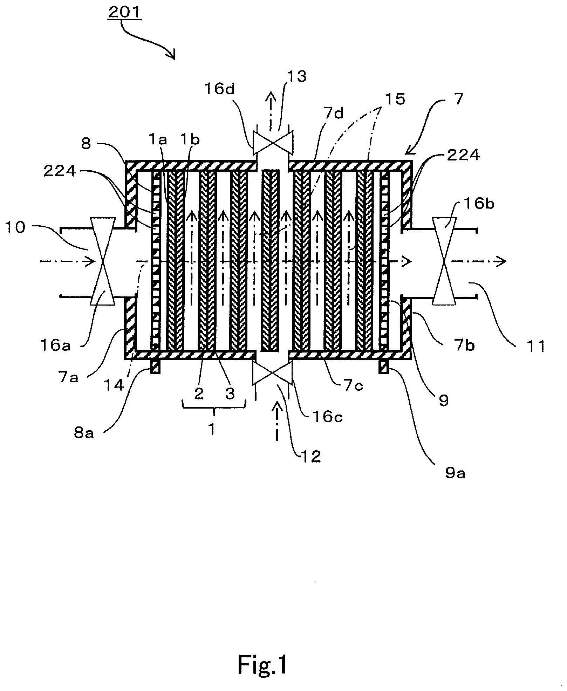

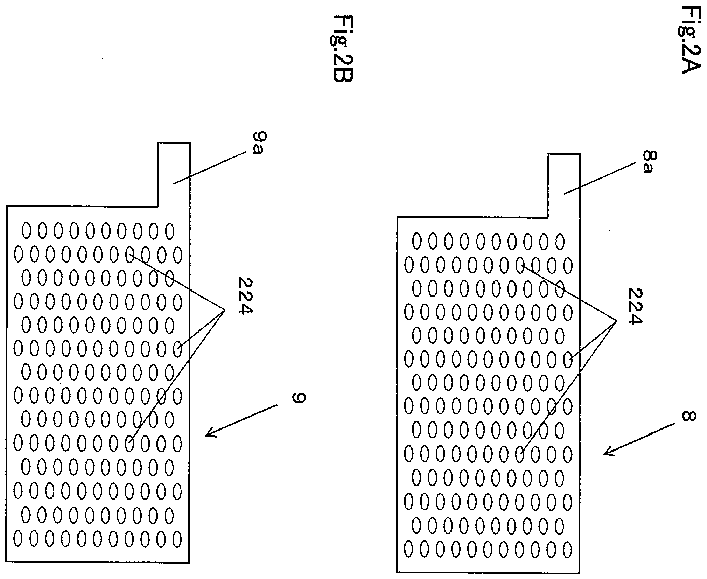

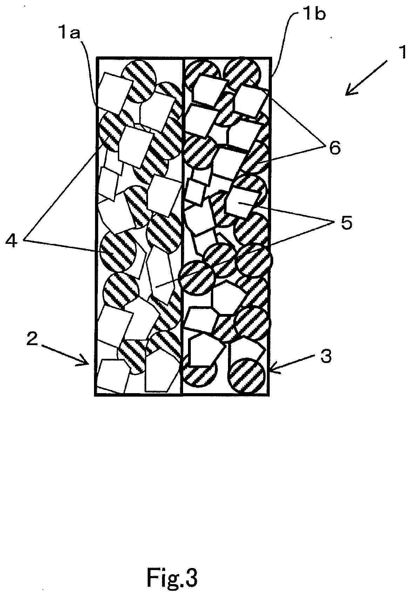

Fig. 1 is a transverse cross-sectional view, which schematically illustrates a regenerative demineralizer apparatus according to Embodiment 1 of the present invention. Fig. 2A is a plan view, which schematically illustrates a main surface of a cathode. Fig. 2B is a plan view, which schematically illustrates a main surface of an anode. Fig. 3 is a side view, which schematically illustrates a water-splitting micro-porous ion exchange membrane.

A regenerative demineralizer apparatus 201 (hereinafter referred to as "demineralizer apparatus") is, as shown in Fig. 1, an apparatus for removing cation of the hardness element (hereinafter referred to as "hardness ion") such as calcium ion, magnesium ion and the like from water for treatment to demineralize the water for treatment, by means of a water-splitting micro-porous ion exchange membrane 1 (hereinafter referred to as "ion exchange membrane"). The demineralizer apparatus 201 comprises electrodes 8 and 9, ion exchange membranes 1, and a casing 7 for housing the electrodes and the ion exchange membranes 1 therein.

The electrodes include a cathode 8 and an anode 9. Each of the electrodes 8 and 9, as shown in Fig. 2, is a substantially rectangular flat plate and includes connecting sections 8a and 9a and multiple of openings 224. The openings 224 extend through main surfaces of the respective electrodes 8 and 9. The size and the quantity of the openings 224 are set so as to avoid obstructing the flow of the water for treatment that passes through the openings 224. Each of the electrodes 8 and 9 is composed of a plate member of a material such as metals and the like and a protective layer covering a surface thereof. Titanium, which has certain corrosion resistance and mechanical durability, is employed for the metal. Typical protective layer includes a platinum coating and the like, and the thickness of the protective layer is, for example, 0.2 µm to 0.5 µm. Each of the electrodes 8 and 9 is composed of such a metal and a protective layer to ensure long-term durability of the demineralizer apparatus 201.

The ion exchange membrane 1 has a cation exchange surface 1a in one surface, and an anion exchange surface 1b in the other surface. The ion exchange membranes 1 are laminated between the cathode 8 and the anode 9 so that the anion exchange surface 1b faces the anode 9 and the cation exchange surface 1a face the cathode 8.

A cation exchanger membrane 2 and an anion exchange membrane 3 are stacked in the thickness direction and are joined to form the ion exchange membrane 1, as shown in Fig. 3. For this reason, the cation exchange surface 1a is formed in a surface of the cation exchanger membrane 2, and the anion exchange surface 1b is formed in a surface of the anion exchange membrane 3.

The cation exchanger membrane 2 is formed of a sintered body, which is prepared by heating and harden a mixture of cation exchange resin particles 4 and thermoplastic resin particles 5 at a temperature near the melting point of the thermoplastic resin particle 5. Thus, the cation exchange resin particles 4 are fixed in a matrix of the thermoplastic resin particles 5 so that spaces are formed among the cation exchange resin particles 4 and the thermoplastic resin particles 5. Also, the anion exchange membrane 3 is formed of a sintered body, which is prepared by heating and hardens a mixture of anion exchange resin particles 6 and thermoplastic resin particles 5 at a temperature near the melting point of the thermoplastic resin particle 5. Thus, the anion exchange resin particles 6 are fixed in a matrix of the thermoplastic resin particle 5 so that spaces are formed among the anion exchange resin particles 6 and the thermoplastic resin particles 5.

Thermoplastic resin particle 5 is formed of a thermoplastic resin such as, for example: polyolefin resins such as polyethylene and polypropylene and the like; ethylene-propylene copolymers; ethylene-vinyl acetate copolymers; and ethylene-acrylic acid copolymers and the like.

Particle size of the thermoplastic resin particle 5 is set to, for example, several tens to several hundreds micrometers (µm). However, smaller particle size of the thermoplastic resin particle 5 provides increased rate of adsorption of hardness ions onto the ion exchange membrane 1 to provide enhanced efficiency for removing hardness ions. However, smaller particle size of the thermoplastic resin particle 5 also causes increased pressure drop when the water for treatment passes through the ion exchange membrane 1. Thus, the particle size of thermoplastic resin particle 5 is defined by considering the balance between the efficiency for eliminating hardness ions and the pressure drop.

The cation exchange resin particle 4 is formed of, for example, a strongly acidic cation exchange resin having exchange group: -SO₃H. The anion exchange resin particle 6 is formed of, for example, a strongly basic anion exchange resin having exchange group: -NR₃OH. However, the cation exchange resin particle 4 may alternatively be formed of a weakly acidic cation-exchange resin having exchange group: -RCOOH. Also, the anion exchange resin particle 6 may alternatively be formed of a weakly basic anion-exchange resin having a group: -NR₂.

The content of the cation exchange resin particle 4 in the cation-exchanger membrane 2 and the content of the anion exchange resin particle 6 in the anion-exchange membrane 3 are 10 to 60 % wt. (percent by weight) over the weight of the respective ion exchange membranes 2 and 3, and preferably 30 to 50 % wt. The contents of the respective ion exchange resin particles 4 and 6 of equal to or larger than 60 % lead to reduced amount of the thermoplastic resin particles 5 in the respective ion exchange resin particles 4 and 6, which causes a difficulty in fixing the respective ion exchange resin particles 4 and 6 by the thermoplastic resin particle 5. On the other hand, the content of the respective ion exchange resin particles 4 and 6 of equal to or smaller than 10 % lead to reduced capacity in unit volume to exchange ions by the respective ion exchange membranes 2 and 3. Thus, in order to obtain targeted ion exchange performances, it is necessary to increase the size of the respective ion exchange membranes 2 and 3, which, in turn, leads to increase in the size and the cost of the demineralizer apparatus 201. In particular, if the content of the respective ion exchange resin particles 4 and 6 is 30 to 50 % wt., the ion exchange capacity of the ion exchange membrane 1 can be remained and the ion exchange membrane 1 can be stably employed for long term.

The casing 7 has, as shown in Fig. 1, a cuboid shape, and includes first to fourth side surfaces 7a to 7d, a first end surface, a second end surface and a hollow section surrounded thereby. The second side surface 7b faces the first side surface 7a, and the fourth side surface 7d faces the third side surface 7c. The first and the second side surfaces 7a and 7b are shorter than the third and the fourth side surfaces 7c and 7d. Thus, a distance between the first side surface 7a and the second side surface 7b is longer than a distance between the third side surface 7c and the fourth side surface 7d.

The casing 7 includes a first inlet 10 and a first outlet 11 of the water for treatment and a second inlet 12 and a second outlet 13 of the water for regeneration. The first inlet 10 and the second inlet 12 are connected to pipes (not shown), respectively, which are supplied from a water source such as tap water tube or the like. The first outlet 11 is connected to a tap (not shown) for discharging the demineralized water, or to apparatuses utilizing the demineralized water (not shown) such as a hot water dispenser, a hot water heating system, a laundry machine, a water purification system and the like. The second outlet 13 is connected to a path for discharging the water for regeneration (not shown), which has been utilized in the regeneration treatment of the ion exchange membrane 1, and the like.

The first inlet 10, which the water for treatment is entered, is provided in the first side surface 7a, and the first outlet 11, from which the water for treatment is flowed out, is provided in the second side surface 7b. Also, the second inlet 12, which the water for regeneration is entered, is provided in the third side surface 7c, and the second outlet 13, from which the water for regeneration is flowed out, is provided in the fourth side surface 7d. Thus, the first inlet 10, the first outlet 11, the second inlet 12 and the second outlet 13 are disposed so that a straight line connecting the first inlet 10 and the first outlet 11 of the water for treatment is perpendicular to a straight line connecting the second inlet 12 and the second outlet 13 of the water for regeneration. The respective inlets 10 and 12 and the respective outlets 11 and 13 extend through the associated side surfaces 7a to 7d, respectively. Solenoid valves 16a to 16d are provided in the first inlet 10, the first outlet 11, the second inlet 12 and the second outlet 13, respectively. In addition to above, the straight line connecting the first inlet 10 and the first outlet 11 of the water for treatment is created by connecting a center of the first inlet 10 and a center of the first outlet 11. The straight line connecting the second inlet 12 and the second outlet 13 of the water for regeneration is created by connecting a center of the second inlet 12 and a center of the second outlet 13. Also, the first inlet 10, the first outlet 11, the second inlet 12 and the second outlet 13 are arranged so that the straight line connecting the first inlet 10 and the first outlet 11 of the water for treatment is perpendicular to the straight line connecting the second inlet 12 and the second outlet 13 of the water for regeneration, and therefore the direction of the overall flow of the water for treatment from the first inlet 10 to the first outlet 11 is perpendicular to the direction of the overall flow of the water for regeneration from the second inlet 12 to the second outlet 13.

The inside of the hollow section in the casing 7 accommodates the anode 9, the cathode 8, and the laminated body of one or more, 7 in this Embodiment, of ion exchange membranes 1. The anode 9, the cathode 8 and the ion exchange membranes 1 are arranged in parallel with each other so that the cation exchange membrane 2 faces the cathode 8 and the anion exchange membrane 3 faces the anode 9. The ion exchange membranes 1 are provided so as to be perpendicular to the straight line connecting the first inlet 10 and the first outlet 11. Thus, a flow path 14 of the water for treatment entering from the first inlet 10 and flowing out from the first outlet 11 extends in a direction perpendicular to the ion exchange membrane 1. Since the ion exchange membrane 1 is formed to have a size substantially equivalent to the size of the longitudinal cross-section of the hollow section in the casing 7, the ion exchange membranes 1 are disposed so as to block the flow path 14 of the water for treatment. Also, the ion exchange membranes 1 are disposed so as to be in parallel with the straight line connecting the second inlet 12 and the second outlet 13. Thus, a flow path 15 of the water for regeneration entering from the second inlet 12 and flowing out from the second outlet 13 extends along the ion exchange membrane 1. Also, a clearance is provided among the anode 9, the cathode 8 and the ion exchange membranes 1. This clearance forms the flow path 15 of the water for regeneration. Further, the flow path 14 of the water for treatment formed between the first inlet 10 and the first outlet 11 is longer than the flow path 15 of the water for regeneration formed between the second inlet 12 and the second outlet 13. Thus, differential pressure of the water for treatment created between the first inlet 10 and the first outlet 11 is larger than differential pressure of the water for regeneration created between the second inlet 12 and the second outlet 13 at a flow rate equivalent to the flow rate of the water for treatment.

Apertures (not shown) are further provided in the casing 7. The connecting section 8a of the cathode 8 and the connecting section 9a of the anode 9 are protruded through these apertures, respectively. A seal member (not shown) fills the spaces between the respective apertures and the connecting sections 8a and 9a to retain water-sealing ability of the casing 7. Respective connecting sections 8a are 9a are connected to a power source (not shown) through electric wires (not shown), and a switch (not shown) is provided in the electric wire.

### [Demineralization Step in Demineralizer apparatus]

In the demineralization step for removing hardness ions from the water for treatment, the switch is opened so that the respective electrodes 8 and 9 are not connected to the power source, and thus no electric voltage is applied to the respective electrodes 8 and 9. Then, the solenoid valves 16a and 16b disposed at the first inlet 10 and the first outlet 11, respectively, are opened and the solenoid valves 16c and 16d disposed at the second inlet 12 and the second outlet 13, respectively, are closed. This allows the water for treatment to enter the casing 7 from the first inlet 10, and uniformly flow through the hollow section therein, and flow out from the first outlet 11. In addition to above, the solenoid valves 16b and 16a are simultaneously opened and the solenoid valves 16d and 16c are simultaneously closed to reduce pressure change of the water for treatment and the like in the inside of the casing 7.

The water for treatment enters from the first inlet 10, passing through the aperture 224 of the cathode 8, and further passes through the ion exchange membranes 1. In this occasion, hardness ions contained in the water for treatment are adsorbed on the cation exchange resin particles 4 in the cation exchange membrane 2. As a result, hardness ions are removed from the water for treatment, so that the water for treatment is processed into soft water or demineralized water, and is discharged from the first outlet 11.

Since this flow path 14 of the water for treatment is longer than the flow path 15 of the water for regeneration, flow velocity of the water for treatment is reduced by drag. Moreover, when the water for treatment passes through the ion exchange membranes 1, the water for treatment encounters the resistance of the ion exchange membranes 1, such that flow velocity of the water for treatment is further reduced. This causes increased time which the water for treatment stays in the casing 7, and thus the water for treatment is in contact with the cation exchange resin particles 4 for longer time. Further, the water for treatment also passes through the cation exchange membrane 2, so that the water for treatment is in contact with the cation exchange resin particles 4 in the inside of the cation exchange membrane 2. Consequently, hardness ions in the water for treatment are in contact with larger amount of cation exchange resin particles 4 for longer time to be adsorbed thereon , so that enhanced adsorption efficiency of hardness ions can be achieved.

As described above, higher adsorption efficiency of hardness ions is achieved. As a result, it is not necessary to utilize the electrophoresis, in which electric voltage is applied to the respective electrodes 8 and 9 to move hardness ions to move hardness ions through the ion exchange membrane 1. Therefore, no electric power is consumed in the demineralization step, and thus the whole consumption of the electric power is reduced.

Further, no electric voltage is applied to the respective electrodes 8 and 9 to avoid generation of hydrogen and oxygen gases at the respective electrodes 8 and 9 by electrolysis of water in the demineralization step. Therefore, in the apparatus, in which the demineralized water for treatment is supplied, a problem related to the safety of the apparatus caused due to accumulation of gases emitted from the water for treatment in the apparatus provided in the downstream side can be prevented.

### [Regeneration Step in Demineralizer Apparatus]

In the regeneration step for removing hardness ions from the ion exchange membranes 1, the switch is closed to connect the respective electrode 8 and 9 to the power source, so that DC voltage of, for example, 100 V to 300 V is applied to the respective electrodes 8 and 9. Then, the solenoid valves 16a and 16b in the first inlet 10 and the first outlet 11 are closed and the solenoid valves 16c and 16d in the second inlet 12 and the second outlet 13 are opened. This allows the water for regeneration to enter the casing 7 from the second inlet 12. The water for regeneration enters each of flow paths 15 of the water for regeneration formed between the adjacent the ion exchange membranes 1. Then, the water for regeneration moves in the respective flow paths 15 of the water for regeneration while spreading along the surfaces of the ion exchange membranes 1 to be discharged from the second outlet 13.

As described above, application of electric voltage induces electrolysis of the water for regeneration in the casing 7 occurred in the interface between the cation exchange membrane 2 and the anion exchange membrane 3, in which hydrogen ion is generated in the cation exchange membrane 2 and hydroxide ion is generated in the anion exchange membrane 3. Thus, hydrogen ion generated by the electrolysis is replaced with hardness ions which have been adsorbed on the cation exchange resin particles 4 of the cation exchange membrane 2 when the water for regeneration passes through the flow paths 15 of the water for regeneration. Hardness ions are removed from the cation exchange membrane 2 by this replacement to regenerate the ion exchange membrane 1.

Hardness ions, which has been eliminated from the ion exchange membrane 1, is discharged from the second outlet 13 with the accompanying flow passing through the flow paths 15 of the water for regeneration. In such configuration, the flow paths 15 of the water for regeneration are in parallel with the ion exchange membrane 1, and therefore hardness ions moving through the flow paths 15 of the water for regeneration move along the surface of the ion exchange membrane 1. This prevents the hardness element ions from re-adhering onto the ion exchange membrane 1 substantially without entering the inside of the ion exchange membrane 1, so that the ion exchange membrane 1 is effectively regenerated.

Also, hydrogen ion for substituting hardness ions, which has been adhered onto the ion exchange membrane 1, is generated in the interface between the cation exchange membrane 2 and the anion exchange membrane 3. This configuration provides that hardness ions are removed from the inside of the ion exchange membrane 1 by means of hydrogen ions to regenerate the entire ion exchange membrane 1.

Further, since the flow path 15 of water for regeneration is shorter than the flow path 14 of the water for treatment, decrease in the flow velocity of the water for regeneration by drag is small. Moreover, since the water for regeneration passes along the surface of the ion exchange membrane 1, resistance of the ion exchange membrane 1 is smaller, and thus the decrease in the flow velocity of the water for regeneration is depressed. This configuration provides reduced time that the water for regeneration stays in the casing 7 and reduced time that the water for regeneration is in contact with the cation exchange resin particles 4. Further, the water for regeneration flows along the surface of the cation exchange membrane 2 to cause substantially no contact between the cation exchange resin particle 4 in the inside of the cation exchange membrane 2 and the water for treatment. Consequently, the time and the dimensional range for contacting hardness ions in the water for regeneration with the cation exchange resin particles 4 are reduced, so that re-adsorption of hardness ions onto the ion exchange membrane 1 is prevented.

Also, when the water for treatment is flowed, the first inlet 10 and the first outlet 11 are opened and the second inlet 12 and the second outlet 13 are closed. This configuration provides that the water for treatment entering from the first inlet 10 flows out from the first outlet 11, without flowing out from the second inlet 12 and the second outlet 13. Thus, the flow path 14 of the water for treatment extending from the first inlet 10 to the first outlet 11 is created to achieve effective demineralization treatment.

Further, when the water for regeneration is flowed, the second inlet 12 and the second outlet 13 are opened and the first inlet 10 and the first outlet 11 are closed. This configuration provides that the water for regeneration entering from the second inlet 12 flows out from the second outlet 13, without flowing out from the first inlet 10 and the first outlet 11. Thus, the flow path 15 of the water for regeneration extending from the second inlet 12 to the second outlet 13 is created to achieve effective regeneration treatment.

### (Embodiment 2)

In Embodiment 1, the ion exchange membrane 1 is provided to be perpendicular to the straight line connecting the first inlet 10 and the first outlet 11, or more specifically, the flow path 14 of the water for treatment. On the contrary, in Embodiment 2, the ion exchange membrane 1 is provided to be in parallel with the straight line connecting the first inlet 10 and the first outlet 11, or more specifically, the flow path 14 of the water for treatment.

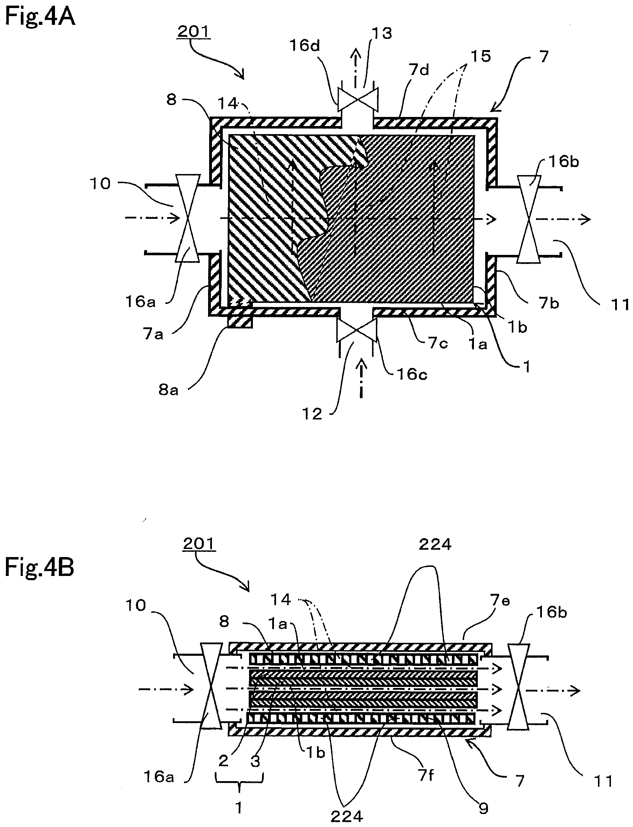

Fig. 4A is a transverse cross-sectional view, which schematically illustrates a demineralizer apparatus according to Embodiment 2 of the present invention. Fig. 4B is a longitudinal sectional view, which schematically illustrates the demineralizer apparatus of Fig. 4A.

A cathode 8 and an anode 9 are disposed so as to be in parallel with a first end surface 7e and a second end surface 7f of the casing 7.

The ion exchange membrane 1 is provided between the cathode 8 and the anode 9 so that the anion exchange membrane 3 faces the anode 9 and the cation exchange membrane 2 faces the cathode 8. The ion exchange membrane 1 has rectangle shape having longer sides 1a and shorter sides 1b. Respective lengths of the longer side 1a and the shorter side 1b are determined on the basis of probability of contacting hardness ions with the ion exchange membrane 1.

The ion exchange membrane 1 is arranged so that the longer side 1a is in parallel with the straight line connecting the first inlet 10 and the first outlet 11 and the shorter side 1a is in parallel with the straight line connecting the second inlet 12 and the second outlet 13. Thus, the anode 9, the cathode 8, and one or more of, for example two in the present Embodiment, of ion exchange membranes 1 are laminated in parallel with each other with clearances therebetween. The flow paths 14 of the water for treatment and the flow paths 15 of the water for regeneration are formed in the clearance between the respective electrodes 8 and 9 and the ion exchange membranes 1 and the clearance between the adjacent ion exchange membranes 1, respectively. These flow paths 14 and 15 are the same as the clearances of the ion exchange membranes 1 and the like, and both flows of water passing each of the flow paths 14 and 15 extend along the surfaces of the ion exchange membranes 1. However, the flows of water passing through the respective flow paths 14 and 15 are different. The flow of the water for treatment in the flow path 14 of the water for treatment is in parallel with the longer side 1a of the ion exchange membrane 1, and the flow of the water for regeneration in the flow path 15 of the water for regeneration is in parallel with the shorter side 1b of the ion exchange membrane 1. Therefore, differential pressure of the water for treatment between the first inlet 10 and the first outlet 11 in the flow path 14 of the water for treatment is larger than differential pressure of the water for regeneration between the second inlet 12 and the second outlet 13 in the flow path 15 of the water for regeneration.

### [Demineralization Step in Demineralizer Apparatus]

In the demineralization step, the solenoid valves 16a and 16b are opened and the solenoid valves 16c and 16d are closed. This allows the water for treatment to enter from the first inlet 10 into the flow path 14 of the water for treatment formed of the clearance of the ion exchange membranes 1 and the like, and to flow along the ion exchange membrane 1. Thus, hardness ions contained in the water for treatment are in contact with the cation exchange membrane 2 of the ion exchange membrane 1, and are adsorbed onto the cation exchange resin particles 4 in the cation exchange membrane 2. Thus, hardness ions are removed from the water for treatment, so that the water for treatment is processed into soft water or demineralized water, and is discharged from the first outlet 11.

Since the water for treatment flows along the ion exchange membrane 1, the water for treatment does not enter the inside of the ion exchange membrane 1, unlike the case that the water for treatment passes through the ion exchange membrane 1. However, since the flow path 14 of the water for treatment is longer, the water for treatment is able to be in contact with the cation exchange resin particles 4 in the ion exchange membrane 1 for longer duration time. Therefore, hardness ions in the water for treatment are in contact with the cation exchange resin particles 4 for longer time to be adsorbed thereon, so that enhanced adsorption efficiency of hardness ions is achieved.

Also, since the adsorption efficiency of hardness ions is higher, it is not necessary to apply electric voltage to the respective electrodes 8 and 9. Therefore, the consumption of electric power is reduced and emission of gas by electrolysis is avoided, so that a problem related to the safety in the apparatus caused due to accumulation of gases in the apparatus provided in the downstream side can be prevented.

### [Regeneration Step in Demineralizer Apparatus 201]

In the regeneration step, the solenoid valves 16a and 16b are closed and the solenoid valves 16c and 16d are opened. This allows the water for regeneration to enter from the second inlet 12 into the flow path 15 of the water for regeneration formed of the clearances of the ion exchange membranes 1 and the like. Also, DC voltage is applied to the respective electrodes 8 and 9 to cause electrolysis of the water for regeneration. This configuration provides that hardness ions, which have been adsorbed on the cation exchange resin particles 4 in the cation exchange membrane 2, are eliminated when the water for regeneration passes through the flow path 15 of the water for regeneration, such that hydrogen ions created by the electrolysis are adsorbed on the cation exchange resin particles 4. Therefore, hardness ions are removed from the cation exchange membrane 2 to achieve the regeneration of the ion exchange membrane 1.

Since this water for regeneration flows along the ion exchange membrane 1, re-adsorption of the eliminated hardness ions entering the inside of the ion exchange membrane 1 is prevented. Also, since the flow path 15 of the water for regeneration is shorter than the flow path 14 of the water for treatment, the time that the water for regeneration is in contact with the cation exchange resin particles 4 is reduced, so that re-adsorption of hardness ions in the side of the downstream of the ion exchange membrane 1 is prevented. Further, since hydrogen ion is generated in the interface between the cation exchange membrane 2 and the anion exchange membrane 3, hardness ions are removed from the entire interior of the ion exchange membrane 1 to regenerate the entire ion exchange membrane 1.

### (Embodiment 3)

In the demineralizer apparatus 201 of Embodiment 1 and 2, the single ones of the first inlet 10, the first outlet 11, the second inlet 12 and the second outlet 13 are provided one by one. On the contrary, the demineralizer apparatus 201 of Embodiment 3 includes a plurality of the first inlets 10, the first outlets 11, the second inlets 12 and the second outlets 13. Also, the demineralizer apparatus 201 of Embodiment 3 further comprises a diffusion layer 218, a spacer member 217 and a seal member 219.

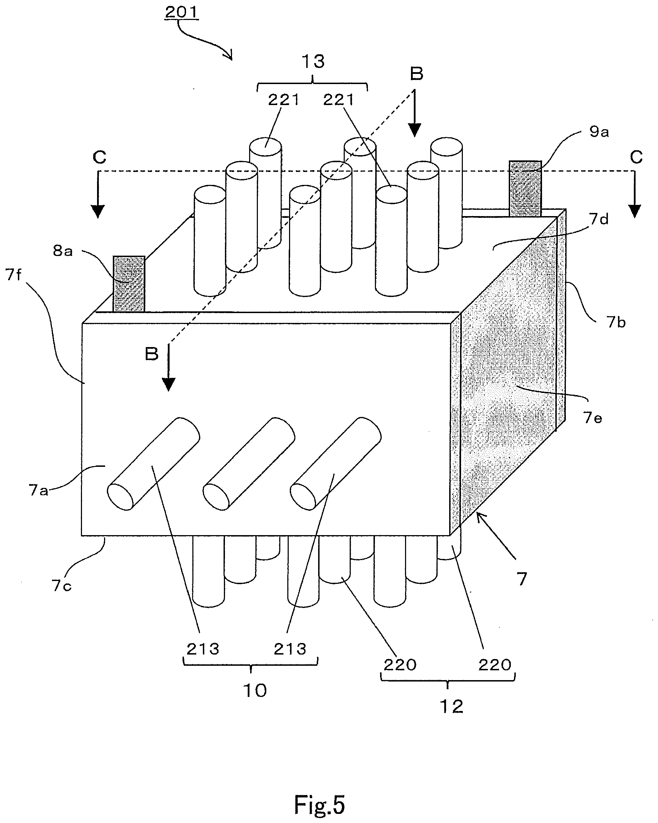

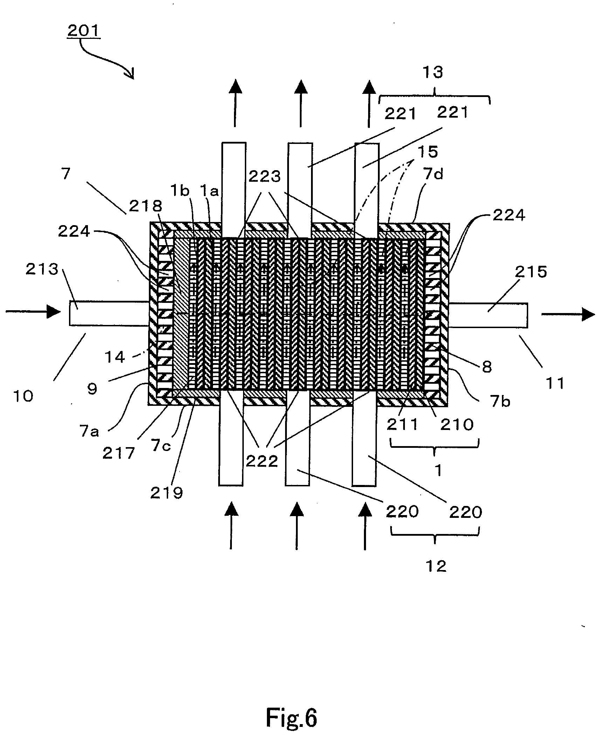

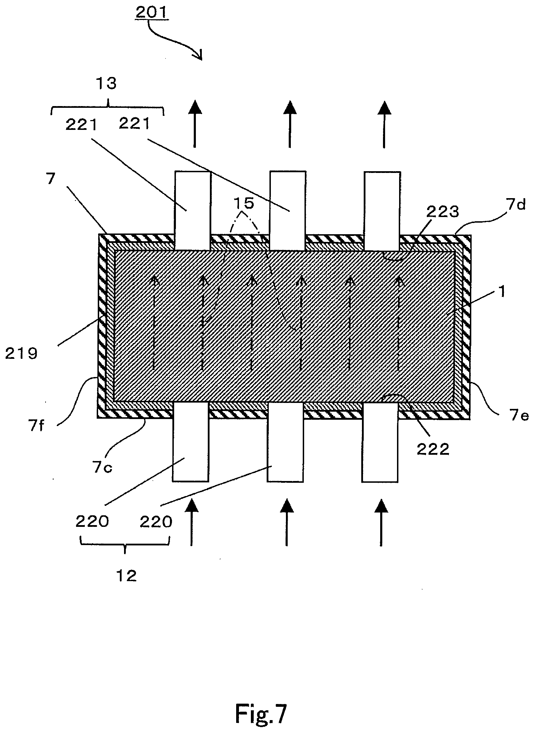

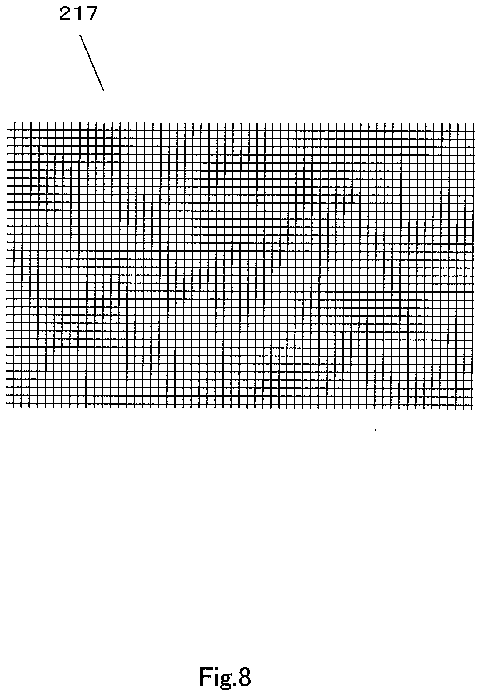

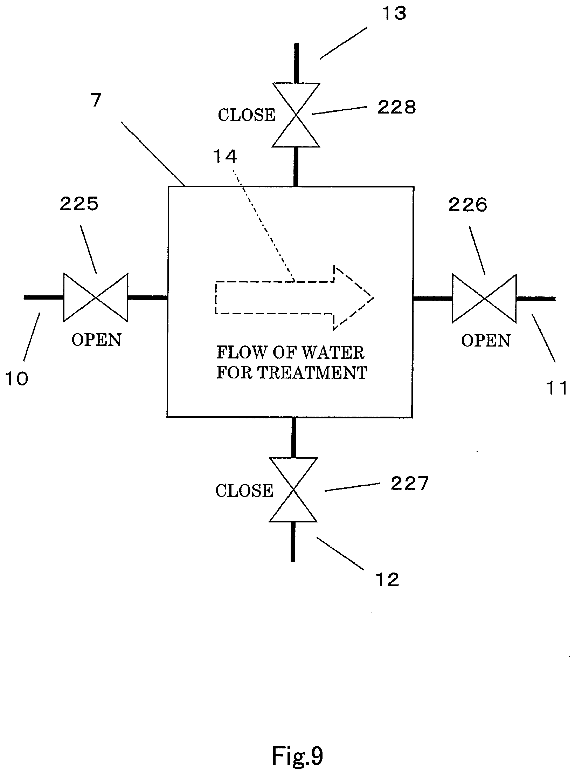

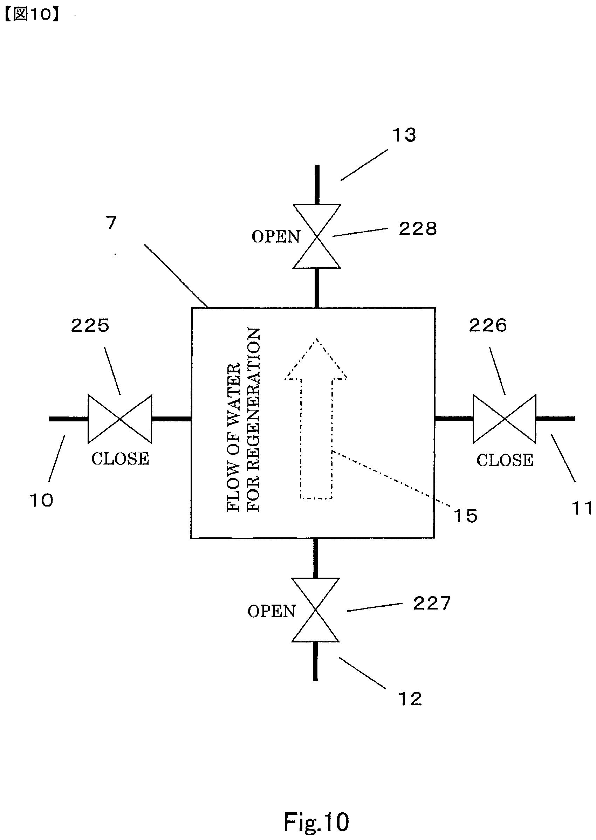

Fig. 5 is a perspective view, which schematically illustrates a demineralizer apparatus according to Embodiment 3 of the present invention. Fig. 6 is a longitudinal sectional view, which illustrates the demineralizer apparatus exploded along line B-B shown in Fig. 5. Fig. 7 is a transverse cross-sectional view, which illustrates the demineralizer apparatus 201 exploded along line C-C shown in Fig. 5. Fig. 8 is a plan view, which schematically illustrates a spacer member employed in the demineralizer apparatus of Fig. 5. Fig. 9 is a conceptional diagram, which illustrates a flow of water for treatment in the demineralization step. Fig. 10 is a conceptional diagram, which shows a flow of water for regeneration in the regeneration step.

### [Configuration of Demineralizer Apparatus]

In the demineralizer apparatus 201, the first inlet 10, the first outlet 11, the second inlet 12 and the second outlet 13 are provided in the casing 7 as shown in Fig. 5. Three pipes 213 serving as the first inlets 10, for example, are connected to the first side surface 7a. These pipes 213 are bundled into a single main pipe (not shown), which is provided with a solenoid valve 225 (Fig. 9 and Fig. 10). Three pipes 215 (Fig. 6) serving as the first outlets 11, for example, are connected to the second side surface 7b. These pipes 215 are bundled into a single main pipe (not shown), which is provided with a solenoid valve 226 (Fig. 9 and Fig. 10). Nine pipes 220 serving as the second inlets 12, for example, are connected to the third side surface 7c. These pipes 220 are bundled into a single main pipe (not shown), which is provided with a solenoid valve 227 (Fig. 9 and Fig. 10). Nine pipes 221 serving as the second outlet 13, for example, are connected to the fourth side surface 7d. These pipes 221 are bundled into a single main pipe (not shown), which is provided with a solenoid valve 228 (Fig. 9 and Fig. 10). However, the solenoid valves 225 to 228 may alternatively be connected to each of the pipes, instead of the respective main pipes.

The casing 7 accommodates, as shown in Fig. 6, a pair of electrodes 8 and 9, and a laminated body formed of a plurality of, 10 in this Embodiment, of the laminated ion exchange membranes 1 in the inside thereof. The ion exchange membrane 1 is disposed between the anode 9 and the cathode 8 so that the cation exchange membrane 210 is oriented in parallel with the cathode 8 and the anion exchange membrane 211 is oriented in parallel with the the anode 9.

A cation exchange membrane 210 and an anion exchange membrane 211 are stacked in the thickness direction and are joined to form the ion exchange membrane 1. This cation exchange membrane 210 is equivalent to the cation exchange membrane 2 shown in Fig. 3, and the anion exchange membrane 211 is equivalent to the anion exchange membrane 3 shown in Fig. 3.

The spacer members 217 are provided so as to interleave the ion exchange membrane 1 therebetween, in order to ensure a flow path for flowing the water for regeneration between adjacent ion exchange membranes 1 in the laminated body. Also, the spacer members 217 may be disposed between the anode 9 and the ion exchange membrane 1 and between the cathode 8 and the ion exchange membrane 1. A platelike member having a larger number of through holes such as, for example, a netlike mesh sheet as shown in Fig. 8, is employed for the spacer member 217, and the size thereof is set to, for example, a size equivalent to that of the surface of the ion exchange membrane 1. The spacer member 217 is formed of, for example, a fluororesin: ethylene tetrafluoroethylene (ETFE), which has certain mechanical durability and water resistance.

The diffusion layer 218 is a layer serving as diffusing the water for treatment entering from the first inlet 10 toward a direction perpendicular to the flow path 14 of the water for treatment. The diffusion layer 218 is formed of a resin having certain mechanical durability and water resistance such as, for example, polyethylene or high density polyethylene. The diffusion layer 218 is composed of, for example, a micro-porous sheet having larger hydraulic resistance in the permeability than the ion exchange membrane 1. The diffusion layer 218 is disposed between the laminated body of the ion exchange membrane 1 and an electrode in the side of the first inlet 10, specifically the anode 9 in this Embodiment. The diffusion layer 218 is arranged to be perpendicular to the flow path 14 of the water for treatment and in parallel with the ion exchange membrane 1.

The seal member 219 is, as shown in Fig. 6 and Fig. 7, a non-permeable member, which covers circumference of the laminated body of the ion exchange membranes 1. The seal member 219 fills a space between an end surface of the ion exchange membrane 1 and the inner surfaces 7c, 7d, 7e and 7f of the casing 7 to prevent the water for treatment from passing through this space. This end surface of the ion exchange membrane 1 is a surface, which is arranged so as to be perpendicular to a joint surface of the ion exchange membrane 1 and to be in parallel with the flow path 14 of the water for treatment. The seal member 219 is formed of, for example, a material having certain non-permeability and water resistance such as, for example, a silicon resin.

The seal member 219 includes a plurality of openings 222 and 223 in the respective side surfaces 7c and 7d of the casing 7. A plurality of openings 222 and 223 extend through the thickness direction of the seal member 219. The openings 222 are arranged so that the quantity thereof is identical to the quantity of the pipes 220 of the second inlet 12 and the positions thereof are adjusted to face the respective pipes 220 and the spacer members 217. Thus, the water for regeneration entering from the pipes 220 flows into the flow path 15 of the water for regeneration formed in the spacer member 217. Also, the openings 223 are arranged so that the quantity thereof is identical to the quantity of the pipes 221 of the second outlet 13 and the positions thereof are adjusted to face the respective pipes 221 and the spacer members 217. Thus, the water for regeneration, which has passed through the flow path 15 of the water for regeneration in the spacer member 217, is discharged from the pipes 221.

### [Demineralization Step of Demineralizer Apparatus]

In the demineralization step, as shown in Fig. 9, the solenoid valves 225 and 226 are opened to open the flow path 14 of the water for treatment connecting the first inlet 10 and the first outlet 11. On the other hand, the solenoid valves 228 and 227 are closed to shut the flow path 15 of the water for regeneration connecting the second inlet 12 and the second outlet 13. This configuration provides that the water for treatment enters the casing 7 from the pipes 213 of the first inlet 10 as shown in Fig. 6, and passes through the openings 224 of anode 9 to reach the diffusion layer 218. The water for treatment diffuses in a direction perpendicular to the direction of the flow path 14 of the water for treatment in the diffusion layer 218 to spread over the entire surface of the diffusion layer 218. The water for treatment uniformly flows from the whole diffusion layer 218 toward the entire surface of the ion exchange membrane 1. The water for treatment is flowing in a through hole of the spacer member 217 and the ion exchange membrane 1. While the resistance for the water for treatment passing through the interior of the ion exchange membrane 1 is larger, the circumference of the laminated body of the ion exchange membranes 1 is covered with the seal member 219 to allow the water for treatment to pass through the ion exchange membranes 1. This allows hardness ions contained in the water for treatment to be adsorbed on the cation exchange membranes 210 of the ion exchange membranes 1 to achieve the demineralization of the water for treatment. Then, the water for treatment passes through the laminated body of the ion exchange membranes 1, and then passes through the openings 224 of cathode 8, and eventually flows out to the pipes 215 of the first outlet 11.

### [Regeneration Step of Demineralizer Apparatus 201]

In the regeneration step, as shown in Fig. 10, the solenoid valves 225 and 226 are closed to block the flow path 14 of the water for treatment connecting the first inlet 10 and the first outlet 11. On the other hand, the solenoid valves 228 and 227 are opened to open the flow path 15 of the water for regeneration connecting the second inlet 12 and the second outlet 13. This allows the water for regeneration to enter the casing 7 from the pipes 220 of the second inlet 12, as shown in Fig. 6 and Fig. 7. In this case, the openings 222 of the seal member 219 face the pipes 220 and the spacer member 217, such that the water for regeneration entering from the pipes 220 flows through the openings 222 into the spacer member 217. The water for regeneration then flows through the flow path 15 of the water for regeneration in the spacer member 217 along the ion exchange membranes 1. In this case, electric voltage of, for example, 100 V to 300 V is applied to the respective electrodes 8 and 9, such that electrolysis of the water for regeneration into hydrogen ion and hydroxide ion is caused in the interfaces of the cation exchange membranes 210 and the anion exchange membranes 211 in the ion exchange membranes. Hardness ions, which have been adsorbed onto the cation exchange membrane 210, are replaced with this hydrogen ion to regenerate the ion exchange membrane 1. Then, hardness ions are eliminated from the cation exchange membrane 210, and are accompanied with the water for regeneration to be carried through the openings 223 pipe 221 and be discharged from the second outlet 13.

### [Function and Advantageous Effect]

In the demineralizer apparatus 201 of the present embodiment, the non-permeable seal member 219 prevents the water for treatment from flowing between the casing 7 and the ion exchange membrane 1. This suppresses the reduction of the amount of the water for treatment passing through the ion exchange membrane 1. Therefore, probability of the contact between the cation exchange resin particle 4 in the cation exchange membrane 210 of the ion exchange membrane 1 and hardness ions is increased, and therefore hardness ions are effectively adsorbed onto the cation exchange resin particles 4 to provide enhanced efficiency of the demineralization of the water for treatment.

Further, the openings 222 and 223 of the seal member 219 face the pipes 220 and 221 and also face the spacer member 217. Thus, the water for regeneration entering from the pipes 220 flows through the openings 222 and smoothly passes through the flow path 15 of the water for regeneration in the spacer member 217. Therefore, hardness ions, which have been eliminated from the ion exchange membrane 1, flows in parallel with the ion exchange membrane 1 while spreading along the surface of the ion exchange membrane 1 substantially without entering the inside of the ion exchange membrane 1 by the water for regeneration. Therefore, adsorption of hardness ions on the cation exchange resin particles 4 can be avoided to provide enhanced regeneration efficiency.

Further, the spacer member 217 is arranged between the adjacent the ion exchange membranes 1 in the laminated body to form the flow path 15 of the water for regeneration extending in parallel with the ion exchange membrane 1. Thus, the water for regeneration smoothly flows in parallel with the ion exchange membrane 1 to provide reduced area and time for the contact of hardness ions released into the water for regeneration with the ion exchange membrane 1. Therefore, re-adsorption of hardness ions on the ion exchange membrane is suppressed to achieve enhanced regeneration efficiency of the ion exchange membrane 1.

Also, the diffusion layer 218 is disposed between the electrode 9 in the side of the first inlet 10 and the laminated body of the ion exchange membrane 1. This configuration provides that the water for treatment entering from the first inlet 10 flows toward the ion exchange membrane 1 while spreading in a direction perpendicular to the flow path 14 of the water for treatment. Therefore, the water for treatment passes over the entire ion exchange membrane 1 so that hardness ions contained in the water for treatment are adsorbed onto the broader range of the ion exchange membrane 1. Consequently, the demineralization performance for the water for treatment further is improved.

### (Embodiment 4)

In the demineralizer apparatus 201 of Embodiment 3, quantity of the pipes 220 of the second inlet 12 and quantity of the pipes 221 of the second outlet 13 are smaller than quantity of the spacer members 217. On the contrary, in the demineralizer apparatus 201 of Embodiment 4, quantity of the pipes 220 of the second inlet 12 and quantity of the pipes 221 of the second outlet 13 are equivalent to quantity of the spacer members 217.

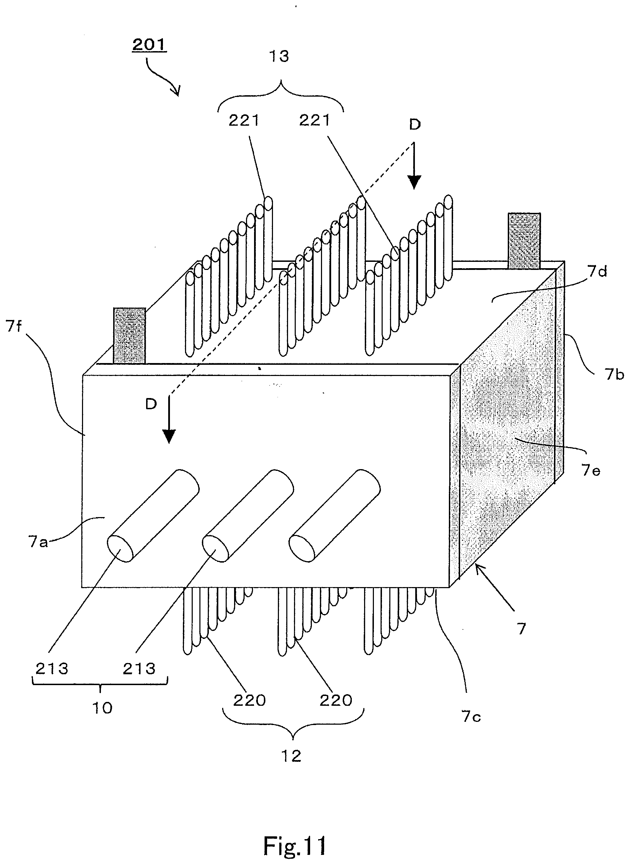

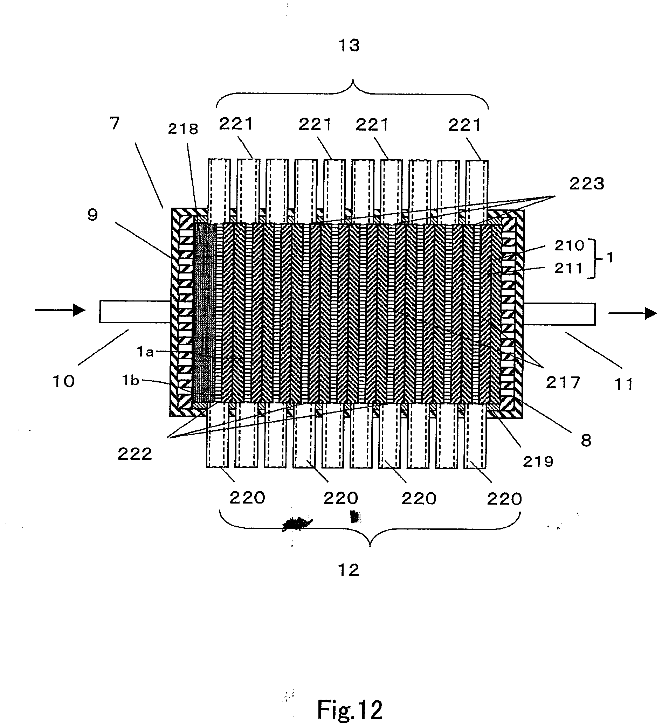

Fig. 11 is a perspective view, which schematically illustrates a demineralizer apparatus according to Embodiment 4 of the present invention. Fig. 12 is a longitudinal sectional view, which illustrates the demineralizer apparatus exploded along line D-D shown in Fig. 11.

Quantities of the pipes 220 of the second inlet 12, the pipes 221 of the second outlet 13, the spacer members 217, and the openings 222 and 223 of the seal member 219 are the same. The openings 222 of the seal member 219 face the respective pipes 220 and the spacer members 217 in one-on-one relation, and the openings 223 face the respective pipes 221 and the spacer members 217 in one-on-one relation. Then, the pipes 220 of the second inlet 12 and the pipes 221 of the second outlet 13 extend through the seal member 219 via the openings 222 and 223. The pipes 220 of the second inlet 12 and the pipes 221 of the second outlet 13 are in contact with a space, in which the spacer member 217 is disposed.

In the regeneration step, the water for regeneration flows from the pipes 220 of the second inlet 12 through openings 222 and into a space member facing thereof. Then, the water for regeneration enters the flow path 15 of the water for regeneration in the space member that faces the opening 222, without branching to the flow paths 15 of the water for regeneration in a plurality of space members. Further, the water for regeneration passing through the flow paths 15 of the water for regeneration flows out from the pipes 221 via the openings 223 facing the space member. Thus, the water for regeneration smoothly flows through the flow paths 15 of the water for regeneration along the ion exchange membrane 1. This provides that the time and the range for contacting hardness ions contained in the water for regeneration with the ion exchange membrane 1 are reduced, so that re-adsorption onto the ion exchange membrane 1 is prevented. As a result, the regeneration efficiency of the ion exchange membrane 1 by the water for regeneration in the entire demineralizer apparatus 201 is further improved.

### (Other Embodiments)

In the demineralizer apparatus 201 of all of the above-described Embodiments, DC voltage of, for example, 100 V to 300 V is applied across the electrodes 9 and 8 in the regeneration step. However, degree of the DC voltage may be appropriately defined according to quantity of the ion exchange membranes 1 disposed in the casing 7 or the hardness of the water for treatment.

Further, while the electrodes 8 and 9 having apertures 224 formed therein is employed in the demineralizer apparatus 201 of all of the above-described Embodiments, electrodes without an aperture may alternatively be employed. In such a case, the water for treatment flows over the circumferences of the electrodes 8 and 9 in Embodiments 1, 3 and 4, and flows between the electrodes 8 and 9 in Embodiment 2.

Also, in the demineralizer apparatus 201 of all of the above-described Embodiments, the cation exchange membrane 2 and the anion exchange membrane 3 are joined together to form the ion exchange membrane 1. However, the ion exchange membrane may be manufactured by laying the cation exchange membrane 2 on the anion exchange membrane 3 in overlapped manner without joining thereof.

Further, the demineralizer apparatus 201 of all of the above-described Embodiments is configured such that, in the ion exchange membrane 1 formed by overlaying the cation exchange membrane 2 and the anion exchange membrane 3, the cation exchange surface 1a is formed in the surface of the cation exchange membrane 2 and the anion exchange surface 1b is formed in the surface of the anion exchange membrane 3. However, the method for forming the cation exchange surface 1a and the anion exchange surface 1b is not limited thereto. For example, a cation exchange surface 1a may be formed in one surface of an ion exchange membrane and an anion exchange surface 1b may be formed in the other surface thereof.

Also, since the water for treatment flows in the direction perpendicular to the ion exchange membrane 1 in the demineralization step in the demineralizer apparatus 201 of the above-described Embodiments 1, 3 and 4, the water-splitting micro-porous ion exchange membrane 1 having permeability is employed for the ion exchange membrane 1.

Further, in the demineralizer apparatus 201 of the above-described Embodiments 3 and 4, both of the diffusion layer 218 and the seal member 219 are provided. However, only the seal member 219 may be provided.

Also, at least any one of the spacer member 217, the diffusion layer 218 and the seal member 219 may be further provided in the demineralizer apparatus 201 of the above-described Embodiment 1.

Further, the spacer member 217 may be further provided in the demineralizer apparatus 201 of the above-described Embodiment 2.

Also, all of the above-described Embodiments may be mutually combined as long as the combination does not exclude each other.

### EXAMPLES

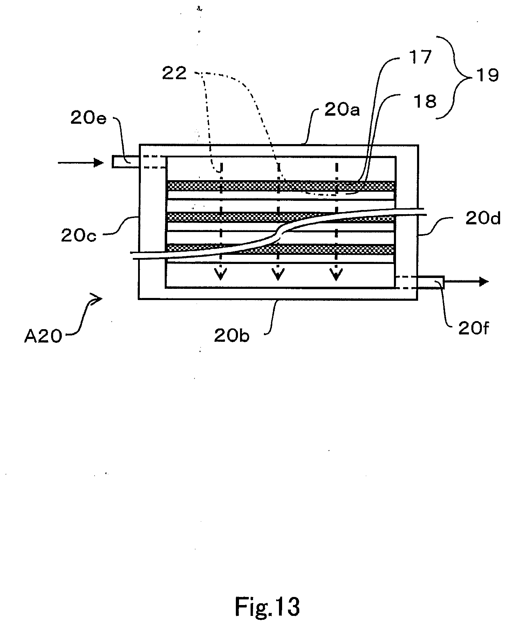

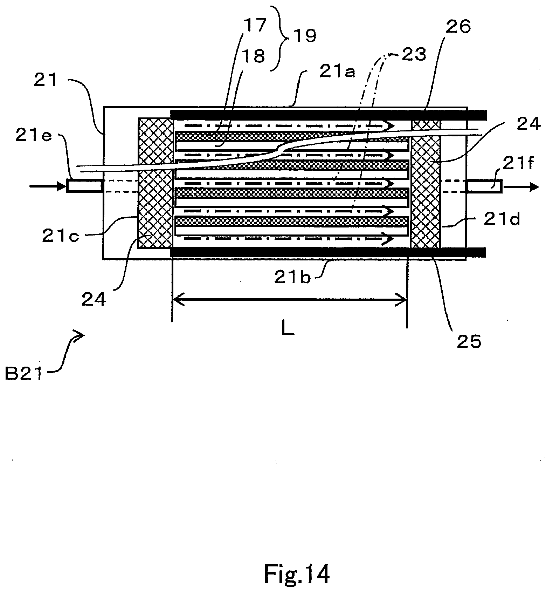

Fig. 13 is a cross-sectional view, which schematically illustrates a first demineralization evaluation apparatus. Fig. 14 is a cross-sectional view, which schematically illustrates a second demineralization evaluation apparatus.

### (Example 1)

Demineralization ability (ability for eliminating hardness ions) corresponding to the direction of the flow of water over the ion exchange membrane 1 was evaluated by employing a first demineralization evaluation apparatus A20 of Fig. 13 and a second demineralization evaluation apparatus B21 of Fig. 14.

A cation exchange membrane 17 was prepared by employing cation exchange resin particles of 100 to 150 µm and polyethylene resin particles as thermoplastic resin particles of several tens to several hundreds micrometers (µm). Also, an anion exchange membrane 18 was prepared by employing anion exchange resin particles of 100 to 150 µm and polyethylene resin particles as thermoplastic resin particles of several tens to several hundreds micrometers (µm). Thickness of each of the ion exchange membranes 17 and 18 was 1 mm. These cation exchange membrane 17 and anion exchange membrane 18 were adhered to form the ion exchange membrane 19. This ion exchange membrane 19 had the thickness of 2 mm, the shorter side of 4 cm, and the longer side of 10 cm.

The first demineralization evaluation apparatus A20 is an apparatus for evaluating the demineralization by rate of decrease of hardness ions contained in water when water was flowed perpendicularly to the ion exchange membrane 1. The first demineralization evaluation apparatus A20 includes first and second longer sides 20a and 20b, first and second shorter sides 20c and 20d, a flow inlet 20e and a flow outlet 20f. The flow inlet 20e is disposed in the first shorter side 20c in the side of the first longer side 20a, and the flow outlet 20f is disposed in the second shorter side 20d in the side of the second longer side 20b. Thus, a flow path 22 in the first demineralization evaluation apparatus A20 water forms a flow extending from the side of the first longer side 20a toward the side of the second longer side 20b side and being perpendicular to the respective longer sides 20a and 20b and in parallel with the respective shorter sides 20c and 20d.

A laminated body formed by laminating a plurality of, for example, 7 in this Example, of the ion exchange membranes 19 is accommodated in the first demineralization evaluation apparatus A20. Thus, the flowed distance of the flow path 22, or specifically the length between the first longer side 20a and the second longer side 20b, is, for example, about 14 mm. Each of the ion exchange membranes 19 is arranged so that the cation exchange membrane 17 face the first longer side 20a in parallel and the anion exchange membrane 18 face the second longer side 20b in parallel. Also, the ion exchange membranes 19 are arranged so that the longer side is in parallel with the respective longer sides 20a and 20b with equal intervals therebetween. Thus, the ion exchange membranes 19 are arranged perpendicularly to the flow of water. Also, since the length between this first shorter side 20c and the second shorter side 20d is, for example 10 cm, the longer side of the ion exchange membrane 19 fits between the first shorter side 20c and the second shorter side 20d. In order to avoid creation of a clearance between this ion exchange membrane 19 and the respective shorter sides 20c and 20d, the clearance may be filled with an adhesive agent or a leak-prevention packing. In this case, the adhesive agent or the like is arranged for the purpose of avoid disturbance of the flow of water from the flow inlet 20e to the flow outlet 20f.

The second demineralization evaluation apparatus B21 is an apparatus for evaluating the demineralization by rate of decrease of hardness ions contained in water when water was flowed in parallel with the ion exchange membrane 1. The second demineralization evaluation apparatus B21 includes first and second longer sides 21a and 21b, first and second shorter sides 21c and 21d, a flow inlet 21e and a flow outlet 21f. The flow inlet 21e is disposed in the first shorter side 21c, and the flow outlet 21f is disposed in the second shorter side 21d. The flow inlet 21e and the flow outlet 21f are arranged between the first longer side 21a and the second longer side 21b so as to face each other. Thus, a water flow path 23 in the second demineralization evaluation apparatus B21 forms a flow in parallel with the respective longer sides 20a and 20b and perpendicular to the respective shorter sides 20c and 20d extending from the side of the first shorter side 21c toward the side of the second shorter side 21d. Thus, the flowed distance of the flow path 23, or specifically the length between the first shorter side 21a and the second shorter side 21b, is, for example, about 10 mm.

A laminated body formed by laminating a plurality of, for example, 7 in this Example, of the ion exchange membranes 19 is accommodated in the second demineralization evaluation apparatus B21. Each of the ion exchange membranes 19 is arranged so that the cation exchange membrane 17 face the first longer side 21a in parallel and the anion exchange membrane 18 face the second longer side 21b in parallel. Also, the respective ion exchange membranes 19 are arranged so that the longer side is in parallel with the respective longer sides 21a and 21b with equal intervals therebetween. Thus, the ion exchange membranes 19 are arranged in parallel with the flow of water. Also, since the length between this first shorter side 21c and the second shorter side 21d is, for example 10 cm, the longer side of the ion exchange membrane 19 fits between the first shorter side 21c and the second shorter side 21d. In order to avoid creation of a clearance between this ion exchange membrane 19 and the respective shorter sides 21c and 21d, the clearance may be filled with an adhesive agent or a leak-prevention packing.
In this case, the adhesive agent or the like is arranged for the purpose of avoid disturbance of the flow of water from the flow inlet 21e to the flow outlet 21f. Also, in order to evenly flow the water for treatment between the respective the ion exchange membranes 19 in the laminated body, current plates 24 are disposed between the first shorter side 21c and the laminated body of the ion exchange membranes 19 and between the second shorter side 21d and the laminated body of the ion exchange membranes 19.

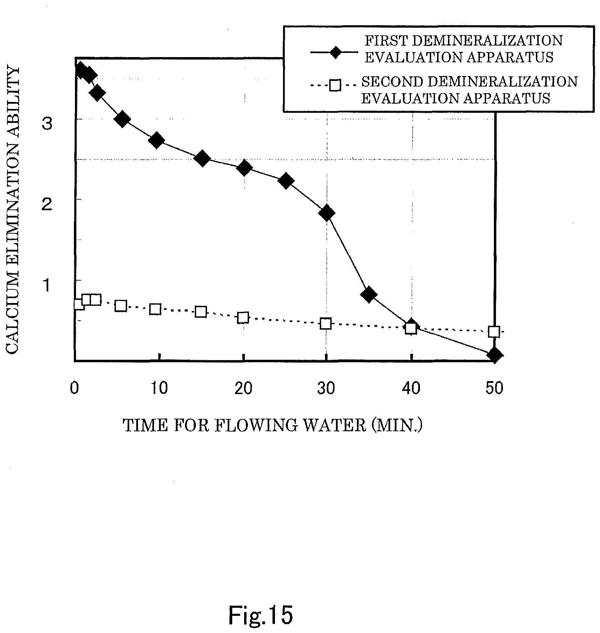

In the demineralization evaluation, the concentration of hardness ions entering from the flow inlets 20e and 21e was first adjusted to about 190 ppm by calcium carbonate (CaCO₃) conversion. This water was introduced from the flow inlets 20e and 21e at, for example, a flow rate of 0.42 L/min. Then, water passed through the flow paths 22 and 23 and flows out from the flow outlets 20f and 21f. Amount of calcium ion contained in water at the flow outlets 20f and 21f was measured. Calcium elimination ability (demineralization ability) in each time for flowing water was obtained as shown in Fig. 15, on the basis of difference of concentration of hardness ions at flow inlets 20e and 20e, about 190 ppm, and concentration of hardness ions at the flow outlets 20f and 21f.

Fig. 15 is a graph, which shows calcium elimination ability (demineralization ability) and relation with time for flowing water. In addition to above, ordinate represents calcium elimination ability obtained by difference of concentration of hardness ions at the flow inlets 20e and 21e and concentration of hardness ions at the flow outlets 20f and 21f standardized with a predetermined value.

The calcium elimination ability (demineralization ability) of the first demineralization evaluation apparatus A20 was very larger than, about three to four times of, the calcium elimination ability (demineralization ability) of the second demineralization evaluation apparatus B21. It is understood from this results that the ion exchange membrane 19 was able to adsorb calcium ions contained in water with higher efficiency to demineralize water by employing the configuration of flowing water perpendicularly to the ion exchange membrane 19 as the first demineralization evaluation apparatus A20.

### (Example 2)

The second demineralization evaluation apparatus B21 of Fig. 14 was employed to evaluate ability to regenerate the ion exchange membrane 1 (ability to eliminate hardness ions from the ion exchange membrane 1) of the demineralizer apparatus 201 depending on the length of the flow path.

In addition to the laminated body of the ion exchange membrane 19, the cathode 26 and the anode 25 are also accommodated in the second demineralization evaluation apparatus B21. A laminated body of the ion exchange membranes 19 is sandwiched between the anode 25 and the cathode 26 so that the anode 25 parallelly faces the anion exchange membrane 18 and the cathode 26 parallelly faces the cation exchange membrane 17.

First of all, supply of water in the second demineralization evaluation apparatus B21 from the flow inlet 21e was continued until the difference of the concentration of hardness ions at the flow inlet 21e and the concentration of hardness ions at the flow outlet 21f was 0 (zero). The saturation of the capacity for exchanging calcium ion of the ion exchange membrane 19 was attained by this operation to achieve the condition that the ion exchange membrane 19 was not able to further adsorb calcium ion.

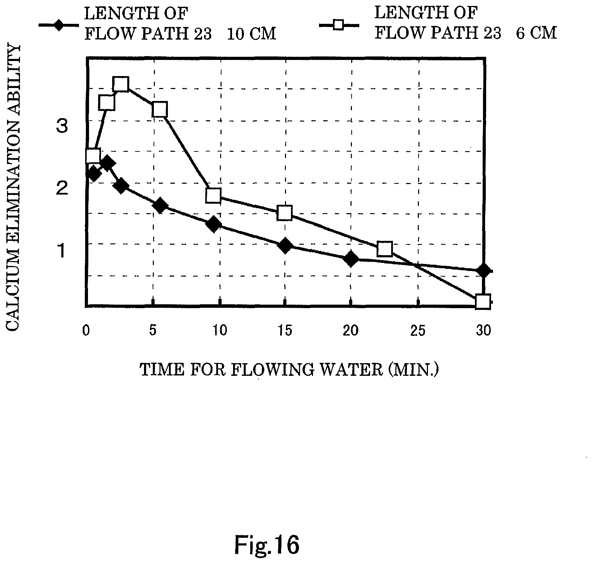

In this second demineralization evaluation apparatus B21, electric voltage of 100 V was applied to the anode 25 and the cathode 26. Also, water at about 50 ppm by calcium carbonate (CaCO₃) conversion was introduced from the flow inlet 21 e at a flow rate of 0.42 L/min. Water flowed in parallel with the ion exchange membrane 19 in the flow path 23, and flowed out from the flow outlet 21f. The concentration of calcium ion contained in water at this flow outlet 21f was measured. Then, the calcium elimination ability (ability to regenerate ion exchange membrane 1) for the flow path 23 having the length of 10 cm was obtained as shown in Fig. 16, on the basis of the difference of the concentration of hardness ion at the flow inlet 21e, about 50 ppm, from the concentration of hardness ion at the flow outlet 21f.

Next, for the purpose of obtaining the calcium elimination ability (ability to regenerate ion exchange membrane 1) for the flow path 23 having the length of 6 cm, water containing calcium ion at a concentration of 190 ppm was introduced again from the flow inlet 21e to attain the condition of the saturation of the capacity for exchanging calcium ion of the ion exchange membrane 19. Respective ion exchange membranes 19 were cut so that this longer side of 10 cm was shortened to 6 cm. The cut ion exchange membrane 19 was housed in the second demineralization evaluation apparatus B21. The length of the flow path 23 was shortened to 6 cm from 10 cm by this operation.

Water at about 50 ppm by calcium carbonate (CaCO₃) conversion was introduced to this second demineralization evaluation apparatus B21 at a flow rate of 0.25 L/min. The space velocity 1/cm of this flow rate L/min. is equivalent to the space velocity 1/cm of the flow rate 0.42 L/min. in the flow path 23 of 10 cm. Then, water flowed out from the flow outlet 21f was collected to measure the concentration of calcium ion contained in this water. the calcium elimination ability (ability to regenerate ion exchange membrane 1) for the flow path 23 having the length of 6 cm was obtained as shown in Fig. 16.

Fig. 16 is a graph, which shows relation of calcium elimination ability (ability to regenerate the ion exchange membrane 1) over time for flowing water. In addition to above, ordinate represents calcium elimination ability obtained by difference of concentration of hardness ions at the flow inlet 21e and concentration of hardness ions at the flow outlet 21f standardized with a predetermined value.

As a result, the calcium elimination ability (ability to regenerate of ion exchange membrane 1) for the length of the flow path 23 of 10 cm was smaller than that for the length of the flow path 23 of 6 cm. As described above, it is clear that shorter flow path 23 provides enhanced prevention for the re-adsorption of calcium ion to provide effective regeneration of the ion exchange membrane 1.

In addition, many improvements and alternative embodiments of the present invention are apparent for those having ordinary skills in the art based on the above-described descriptions. Therefore, the above-described description should be construed as illustrations only, and to be presented for the purpose of teaching the best mode for conducting the present invention by a person having ordinary skills in the art. Details of the structures and/or functions may be substantially modified without departing from the scope of the present invention.

The invention is defined by the appended claims.

### INDUSTRIAL APPLICABILITY

The demineralizer apparatus of the present invention is useful as the demineralizer apparatus with reduced consumption of electric power as compared with the conventional apparatus.

### REFERENCE SIGNS LIST

8 cathode
9 anode
1 water-splitting ion exchange membrane
1a cation exchange surface
1b anion exchange surface
7 casing
10 first inlet
11 first outlet
12 second inlet
13 second outlet
201 demineralizer apparatus
217 spacer member
218 diffusion layer
219 seal member
222 opening
223 opening

## Claims

1. A regenerative demineralizer apparatus (201), comprising: a cathode (8) and an anode (9);
one or more water-splitting ion exchange membranes (1) laminated between the cathode (8) and the anode (9) wherein an anion exchange surface (1b) of the exchange membrane faces the anode (9) and a cation exchange surface (1a) of the exchange membrane faces the cathode (8); and
a casing (7) for housing the cathode (8), the anode (9) and the one or more water-splitting ion exchange membranes (1),
wherein the casing (7) includes a first inlet (10) straight line connected with a first outlet (11) to form a first flow path for water for treatment in between, and a second inlet (12) straight line connected with a second outlet (13) forming a second flow path for water for regeneration in between, **characterized in that**
the water-splitting ion exchange membrane (1) is provided perpendicular to the first flow path and parallel to the second follow path such that water in the first flow path passes through the water-splitting ion exchange membrane.

2. The regenerative demineralizer apparatus (201) according to claim 1, wherein the first flow path and the second flow path are perpendicular to one another.

3. A regenerative demineralizer apparatus (201), comprising: a cathode (8) and an anode (9);
one or more water-splitting ion exchange membranes (1) laminated between the cathode (8) and the anode (9) wherein an anion exchange surface (1b) of the exchange membrane faces the anode (9) and a cation exchange surface (1a) of the exchange membrane faces the cathode (8); and
a casing (7) for housing the cathode (8), the anode (9) and the one or more water-splitting ion exchange membranes (1),
wherein the casing (7) includes a first inlet (10) straight line connected with a first outlet (11) to form a first flow path for water for treatment in between, and a second inlet (12) straight line connected with a second outlet (13) forming a second flow path for water for regeneration in between, **characterized in that**
the water-splitting ion exchange membrane (1) has a rectangle shape, a longer side of the rectangle being in parallel with the first flow path, and a shorter side of the rectangle being in parallel with the second flow path.

4. The regenerative demineralizer apparatus (201) according to claim 3, wherein the first flow path and the second flow path are perpendicular to one another.

5. The regenerative demineralizer apparatus (201) according to claim 1 or 2, wherein the apparatus (201) further comprises a non-permeable seal member (219) covering a circumference of a laminated body, the laminated body being formed by laminating a plurality of the water-splitting ion exchange membranes (1).

6. The regenerative demineralizer apparatus (201) according to claim 1, 2 or 5, wherein the apparatus (201) further comprises a diffusion layer (218), provided between a laminated body formed by laminating a plurality of the water-splitting ion exchange membranes (1) and the electrode (8,9) in a side of the first inlet (10), and having hydraulic resistance in the permeability, which is larger than that of the water-splitting ion exchange membrane (1).

7. The regenerative demineralizer apparatus (201) according to any one of claims 1 to 6, wherein the apparatus (201) further comprises a spacer member (217), provided so as to be sandwiched between the adjacent water-splitting ion exchange membranes (1) in the laminated body formed by laminating a plurality of the water-splitting ion exchange membranes (1).

8. The regenerative demineralizer apparatus (201) according to claim 5, wherein the apparatus (201) further comprises a spacer member (217), provided so as to be sandwiched between the adjacent water-splitting ion exchange membranes (1) in the laminated body, the seal member (219) includes an opening (222, 223) extending through the seal member (219) in the thickness direction and facing each of the second inlet (12) and the second outlet (13) of the water for regeneration, and wherein the opening (222, 223) faces the spacer member (217).

9. The regenerative demineralizer apparatus (201) according to claim 8, wherein the opening (222, 223) is disposed in one-on-one relation with the spacer member (217).

10. The regenerative demineralizer apparatus (201) according to any one of claims 1 to 9, further comprising solenoid valves (16a-16d, 225-228) at the respective first and second inlets (10, 12) and outlets (11, 13) to open and close the first and second flow path in a mutually exclusive manner.

11. The regenerative demineralizer apparatus (201) according to any one of claims 1 to 10, wherein the water-splitting ion exchange membrane (1) is formed of a porous material.

## Patentansprüche

1. Regenerative Wasserenthärtungsvorrichtung (201), enthaltend: eine Kathode (8) und eine Anode (9);
eine oder mehrere wasserspaltende lonenaustauschmembranen (1), die zwischen der Kathode (8) und der Anode (9) geschichtet sind, wobei eine Anionenaustauschoberfläche (1b) der Austauschmembran der Anode (9) zugewandt ist und eine Kationenaustauschoberfläche (1a) der Austauschmembran der Kathode (8) zugewandt ist; und
ein Gehäuse (7) zum Aufnehmen der Kathode (8), der Anode (9) und der einen oder mehreren wasserspaltenden lonenaustauschmembranen (1),
wobei das Gehäuse (7) eine erste Einlassgerade (10) aufweist, die mit einem ersten Auslass (11) verbunden ist, um dazwischen einen ersten Strömungskanal zum Aufbereiten von Wasser zu bilden, und eine zweite Einlassgerade (12) aufweist, die mit einem zweiten Auslass (13) verbunden ist, um dazwischen einen zweiten Strömungskanal zum Regenerieren von Wasser zu bilden,
**dadurch gekennzeichnet, dass**
die wasserspaltende lonenaustauschmembran (1) senkrecht zum dem ersten Strömungskanal und parallel zu dem zweiten Strömungskanal vorgesehen ist, so dass Wasser in dem ersten Strömungskanal durch die wasserspaltende lonenaustauschmembran fließt.

2. Regenerative Wasserenthärtungsvorrichtung (201) nach Anspruch 1,
wobei der erste Strömungskanal und der zweite Strömungskanal senkrecht zueinanderstehen.

3. Regenerative Wasserenthärtungsvorrichtung (201), enthaltend: eine Kathode (8) und eine Anode (9);
eine oder mehrere wasserspaltende lonenaustauschmembranen (1), die zwischen der Kathode (8) und der Anode (9) geschichtet sind, wobei eine Anionenaustauschoberfläche (1b) der Austauschmembran der Anode (9) zugewandt ist und eine Kationenaustauschoberfläche (1a) der Austauschmembran der Kathode (8) zugewandt ist; und
ein Gehäuse (7) zum Aufnehmen der Kathode (8), der Anode (9) und der einen oder mehreren wasserspaltenden lonenaustauschmembranen (1),
wobei das Gehäuse (7) eine erste Einlassgerade (10) aufweist, die mit einem ersten Auslass (11) verbunden ist, um dazwischen einen ersten Strömungskanal zum Aufbereiten von Wasser zu bilden, und eine zweite Einlassgerade (12) aufweist, die mit einem zweiten Auslass (13) verbunden ist, um dazwischen einen zweiten Strömungskanal zum Regenerieren von Wasser zu bilden,
**dadurch gekennzeichnet, dass**
die wasserspaltende lonenaustauschmembran (1) eine rechteckige Form aufweist, wobei eine längere Seite des Rechtecks parallel zum ersten Strömungskanal und eine kürzere Seite des Rechtecks parallel zum zweiten Strömungskanal ist.

4. Regenerative Wasserenthärtungsvorrichtung (201) nach Anspruch 3,
wobei der erste Strömungskanal und der zweite Strömungskanal senkrecht zueinanderstehen.

5. Regenerative Wasserenthärtungsvorrichtung (201) nach Anspruch 1 oder 2,
wobei die Vorrichtung (201) weiterhin ein undurchlässiges Dichtungselement (219) enthält, das einen Umfang eines Schichtkörpers bedeckt, wobei der Schichtkörper durch Schichten einer Mehrzahl der wasserspaltenden lonenaustauschmembranen (1) gebildet wird.

6. Regenerative Wasserenthärtungsvorrichtung (201) nach Anspruch 1, 2 oder 5,
wobei die Vorrichtung (201) weiterhin eine Diffusionsschicht (218) enthält, die zwischen einem Schichtkörper, der durch Schichten einer Mehrzahl der wasserspaltenden lonenaustauschmembranen (1) gebildet wird und der Elektrode (8, 9) in einer Seite des ersten Einlasses (10) vorgesehen ist, und einen hydraulischen Widerstand in der Permeabilität aufweist, der größer als der der wasserspaltenden lonenaustauschmembran (1) ist.

7. Regenerative Wasserenthärtungsvorrichtung (201) nach einem der Ansprüche 1 bis 6,
wobei die Vorrichtung (201) weiterhin ein Abstandselement (217) enthält, das so vorgesehen ist, dass dieses zwischen den benachbarten wasserspaltenden lonenaustauschmembranen (1) in dem durch Schichten einer Mehrzahl der wasserspaltenden lonenaustauschmembranen (1) gebildeten Schichtkörper angeordnet wird.

8. Regenerative Wasserenthärtungsvorrichtung (201) nach Anspruch 5,
wobei die Vorrichtung (201) weiterhin ein Abstandselement (217) enthält, das so vorgesehen ist, dass dieses zwischen den benachbarten wasserspaltenden lonenaustauschmembranen (1) in dem Schichtkörper angeordnet wird, wobei das Dichtungselement (219) eine Öffnung (222, 223) enthält, die sich durch das Dichtungselement (219) in der Dickenrichtung erstreckt und dem zweiten Einlass (12) und dem zweiten Auslass (13) zum Regenerieren des Wassers zugewandt ist, und wobei die Öffnung (222, 223) dem Abstandselement (217) zugewandt ist.

9. Regenerative Wasserenthärtungsvorrichtung (201) nach Anspruch 8,
wobei die Öffnung (222, 223) im Eins-zu-Eins-Verhältnis mit dem Abstandselement (217) angeordnet ist.

10. Regenerative Wasserenthärtungsvorrichtung (201) nach einem der Ansprüche 1 bis 9,
weiterhin enthaltend Magnetventile (16a - 16d, 225 - 228) an den jeweiligen ersten und zweiten Einlässen (10, 12) und Auslässen (11, 13) zum Öffnen und Schließen des ersten und zweiten Strömungswegs in einer sich gegenseitig ausschließenden Weise.

11. Regenerative Wasserenthärtungsvorrichtung (201) nach einem der Ansprüche 1 bis 10,
wobei die wasserspaltende lonenaustauschmembran (1) aus einem porösen Material gebildet ist.

## Revendications

1. Appareil de déminéralisation régénératif (201), comprenant : une cathode (8) et une anode (9) ;
une ou plusieurs membranes échangeuses d'ions de séparation d'eau (1) stratifiées entre la cathode (8) et l'anode (9), une surface échangeuse d'anions (1b) de la membrane échangeuse faisant face à l'anode (9) et une surface échangeuse de cations (1a) de la membrane échangeuse faisant face à la cathode (8) ; et
un boîtier (7) pour loger la cathode (8), l'anode (9) et la ou les membrane(s) échangeuse(s) d'ions à séparation d'eau (1),
dans lequel le boîtier (7) comprend une première ligne droite d'entrée (10) reliée à une première sortie (11) pour former un premier trajet d'écoulement de l'eau pour un traitement entre elles, et une deuxième ligne droite d'entrée (12) reliée à une deuxième sortie (13) formant un deuxième trajet d'écoulement de l'eau pour la régénération entre elles,
**caractérisé en ce que**
la membrane échangeuse d'ions à séparation d'eau (1) est disposée perpendiculairement au premier trajet d'écoulement et parallèlement au deuxième trajet d'écoulement de telle sorte que l'eau dans le premier trajet d'écoulement traverse la membrane échangeuse d'ions de séparation d'eau.

2. Appareil de déminéralisation régénératif (201) selon la revendication 1,
dans lequel le premier trajet d'écoulement et le deuxième trajet d'écoulement sont perpendiculaires l'un à l'autre.

3. Appareil de déminéralisation régénératif (201), comprenant : une cathode (8) et une anode (9) ;
une ou plusieurs membranes échangeuses d'ions de séparation d'eau (1) stratifiées entre la cathode (8) et l'anode (9), une surface échangeuse d'anions (1b) de la membrane échangeuse faisant face à l'anode (9) et une surface échangeuse de cations (1a) de la membrane échangeuse faisant face à la cathode (8) ; et
un boîtier (7) pour loger la cathode (8), l'anode (9) et la ou les membranes échangeuses d'ions à séparation d'eau (1),
dans lequel le boîtier (7) comprend une première ligne droite d'entrée (10) reliée à une première sortie (11) pour former un premier trajet d'écoulement de l'eau pour un traitement entre elles, et une deuxième ligne droite d'entrée (12) reliée à une deuxième sortie (13) formant un deuxième trajet d'écoulement de l'eau pour la régénération entre elles,
**caractérisé en ce que**
la membrane échangeuse d'ions à séparation d'eau (1) a une forme rectangulaire, un côté long du rectangle étant parallèle au premier trajet d'écoulement, et un côté court du rectangle étant parallèle au deuxième trajet d'écoulement.

4. Appareil de déminéralisation régénératif (201) selon la revendication 3,
dans lequel le premier trajet d'écoulement et le deuxième trajet d'écoulement sont perpendiculaires l'un à l'autre.

5. Appareil de déminéralisation régénératif (201) selon la revendication 1 ou 2,
dans lequel l'appareil (201) comprend en outre un élément d'étanchéité non perméable (219) recouvrant une circonférence d'un corps stratifié, le corps stratifié étant formé par stratification d'une pluralité de membranes échangeuses d'ions à séparation d'eau (1).

6. Appareil de déminéralisation régénératif (201) selon la revendication 1, 2 ou 5,
dans lequel l'appareil (201) comprend en outre une couche de diffusion (218), disposée entre un corps stratifié formé par stratification d'une pluralité de membranes échangeuses d'ions à séparation d'eau (1) et l'électrode (8, 9) dans un côté de la première entrée (10), et ayant une résistance hydraulique dans la perméabilité, qui est plus grande que celle de la membrane échangeuse d'ions à séparation d'eau (1).

7. Appareil de déminéralisation régénératif (201) selon l'une quelconque des revendications 1 à 6,
l'appareil (201) comprenant en outre un élément d'espacement (217), disposé de façon à être pris en sandwich entre les membranes échangeuses d'ions de séparation d'eau adjacentes (1) dans le corps stratifié formé par stratification d'une pluralité de membranes échangeuses d'ions à séparation d'eau (1).

8. Appareil de déminéralisation régénératif (201) selon la revendication 5,
dans lequel l'appareil (201) comprend en outre un élément d'espacement (217), disposé de façon à être pris en sandwich entre les membranes échangeuses d'ions de séparation d'eau adjacentes (1) dans le corps stratifié, l'élément d'étanchéité (219) comprenant une ouverture (222, 223) s'étendant à travers l'élément d'étanchéité (219) dans la direction de l'épaisseur et faisant face à chacune de la deuxième entrée (12) et de la deuxième sortie (13) de l'eau de régénération, et l'ouverture (222, 223) faisant face à l'élément d'espacement (217).

9. Appareil de déminéralisation régénératif (201) selon la revendication 8,
dans lequel l'ouverture (222, 223) est disposée en relation biunivoque avec l'élément d'espacement (217).

10. Appareil de déminéralisation régénératif (201) selon l'une quelconque des revendications 1 à 9,
comprenant en outre des électrovannes (16A - 16d, 225 - 228) au niveau des première et deuxième entrées respectives (10, 12) et des sorties (11, 13) pour ouvrir et fermer les premier et deuxième trajets d'écoulement d'une manière mutuellement exclusive.

11. Appareil de déminéralisation régénératif (201) selon l'une quelconque des revendications 1 à 10,
dans lequel la membrane échangeuse d'ions à séparation d'eau (1) est formée d'un matériau poreux.
